# EUROPÄISCHE PATENTANMELDUNG

(11) **EP 1 905 382 A1**
(43) Veröffentlichungstag der Anmeldung: **02.04.2008**
(21) Anmeldenummer: 06020546.5
(22) Anmeldetag: 29.09.2006
(51) Int. Cl.: A61C 17/34

(54) **Elektrozahnbürste und Getriebe für eine Elektrozahnbürste**

(71) Anmelder: Trisa Holding AG, 6234 Triengen (CH)
(72) Erfinder: Fischer, Franz, 6234 Triengen (CH); Bärtschi, Armin, 4652 Winznau (CH); Hilfiker, Christian, 6234 Triengen (CH)
(74) Vertreter: Schaad, Balass, Menzl & Partner AG

(57) **Zusammenfassung**

Das erfindungsgemässe Getriebe (48) für eine Elektrozahnbürste dient der Übertragung und Umformung einer von einem Elektromotor (58) bereitgestellten Drehbewegung in eine Bewegung eines Reinigungselementes (40). Das Getriebe (48) ist erfindungsgemäss mehrstufig mit mindestens einer antriebsseitigen ersten Getriebestufe und mindestens einer abtriebsseitigen zweiten Getriebestufe ausgestattet, von denen wenigstens eine als eine Untersetzung (76) und eine als eine Übersetzung (92) ausgebildet ist.

## Beschreibung

Die vorliegende Erfindung bezieht sich auf ein Getriebe für eine Elektrozahnbürste gemäss dem Oberbegriff des Anspruchs 1 und eine Elektrozahnbürste gemäss Anspruch 16.

Elektrisch betriebene Zahnbürsten, sogenannte Elektrozahnbürsten, die zum Antrieb von Bewegungen an ihnen angeordneter Reinigungselemente Elektromotoren aufweisen, sind zum heutigen Zeitpunkt allgemein bekannt. Typischerweise werden dabei die an Aufsteckbürsten angebrachten Reinigungselemente nach einer Umwandlung einer vom Elektromotor bereitgestellten Drehbewegung über ein untersetzendes Getriebe schwenkend bewegt. Je nach der Bewegungsform die das Reinigungselement um eine ihm zugeordnete Achse vollzieht, unterscheidet man reversierend schwenkende, reversierend translatorische und kombinierte Bewegungen, die sowohl reversierend schwenkende wie auch reversieren translatorische Bewegungskomponenten aufweisen.

Eine Elektrozahnbürste mit einem reversierend schwenkbaren Reinigungselement ist beispielsweise in der US 3,104,409 offenbart. Die darin beschriebene Elektrozahnbürste weist einen Grundkörper mit einem darin aufgenommenen Elektromotor auf, dessen Drehbewegung in eine reversierend schwenkende Bewegung einer Abtriebsachse mittels eines Getriebes umgewandelt wird. Auf die Abtriebsachse ist eine stielartige Aufsteckbürste aufgesteckt, die im kopfseitigen Endbereich ein mit Borsten bestücktes Reinigungselement aufweist. Das Reinigungselement zusammen mit der gesamten Aufsteckbürste vollzieht im angespiesenen Zustand des Elektromotors - das heisst, in einem aktiven Betriebszustand - eine reversierende Schwenkbewegung, um die sich im Wesentlichen parallel zur Längsachse der Aufsteckbürste erstreckende Abtriebsachse.

Eine weitere Elektrozahnbürste ist in der CH 688537 beschrieben. Auch diese Elektrozahnbürste weist einen in einem als Griff ausgebildeten Grundkörper angeordneten Elektromotor auf, der im aktiven Betriebszustand eine Drehbewegung bereitstellt, die mittels eines Getriebes in eine reversierend schwenkende Bewegung einer Abtriebsachse umgewandelt wird. Auch in diesem Fall ist eine Aufsteckbürste mit einem am Kopfbereich angeordneten borstenbesetzten Reinigungselement auf das Grundgerät aufsteckbar. Eine in der Aufsteckbürste bewegliche Achsverlängerung mit einem Auslenkelement wandelt durch einen endbereichseitigen Eingriff des Auslenkelements in einen Führungsschlitz einer das Reinigungselement tragenden Drehscheibe die Schwenkbewegung der Abtriebsachse in eine reversierende Schwenkbewegung des Reinigungselements um. Die dem Reinigungselement zugeordnete Schwenkachse erstreckt sich dabei rechtwinklig zur Abtriebsachse. Die reversierende Schwenkbewegung der im Wesentlichen kreisscheibenförmig ausgebildeten Drehscheibe mit dem daran befestigten Reinigungselement wird auch als reversierend rotierende bzw. reversierend oszillierende Bewegung bezeichnet.

Eine Elektrozahnbürste, bei der im aktiven Betriebszustand ein an einer Aufsteckbürste angeordnetes Reinigungselement eine reversierend translatorische Hin- und Her-Bewegung ausführt, ist beispielsweise in der EP-A-1639914 offenbart. Dabei wird mittels eines schubkurbelartigen Getriebes zwischen einer Antriebsachse eines Elektromotors und einer abtriebseitigen Schubkurbelstange die gesamte Aufsteckbürste parallel zu ihrer Längsachse hin- und herbewegt.

In der US 5,321,865 ist eine orale Hygienevorrichtung, insbesondere auch eine Elektrozahnbürste beschrieben, deren auf einer Aufsteckbürste angeordnetes Reinigungselement im aktiven Betriebszustand eine kombinierte Bewegung ausführt, die sich aus einer reversierenden Schwenkbewegung um eine Abtriebsachse, die im Wesentlichen parallel zur Längsachse der Aufsteckbürste verläuft, und einer reversierend translatorischen Hin- und Her-Bewegung der Abtriebsachse in Richtung der Längsachse der Aufsteckbürste zusammensetzt. Ein dabei zum Einsatz gelangendes Getriebe besitzt zwei exzentrisch auf einem Zahnrad angeordnete Nocken, welche die durch den Elektromotor im angespiesenen Zustand bereitgestellte Drehbewegung in die beiden Bewegungskomponenten, einerseits reversierend schwenkend und andererseits translatorisch hin- und herbewegend, umwandelt und über einen Abnehmer auf die Abtriebsachse überträgt. Aufgrund der spezifischen geometrischen Ausbildung der beiden Nocken oszillieren die beiden Bewegungskomponenten mit der gleichen Frequenz, wie sie durch das Zahnrad, auf welchem sie fest angeordnet sind, vorgegeben ist.

Weitere Details zur Ausgestaltung von Aufsteckbürsten und Reinigungselementen sind beispielsweise den Druckschriften DE-A-19727018, DE-A-4228859 und EP-A-1532891 zu entnehmen.

Aufgabe der vorliegenden Erfindung ist es nun, ein Getriebe für eine Elektrozahnbürste bzw. eine Elektrozahnbürste mit einem derartigen Getriebe bereitzustellen, durch welches es dem Hersteller möglich ist, die von einem Elektromotor bereitgestellte kontinuierliche Drehbewegung in einer Drehrichtung auf eine einfachere und flexiblere Art und Weise besser an die gewünschte Putzbewegung eines Reinigungselements der Elektrozahnbürste anzupassen.

Diese Aufgabe wird durch ein Getriebe für eine Elektrozahnbürste gemäss dem Anspruch 1 und eine Elektrozahnbürste gemäss dem Anspruch 16 gelöst. Besonders bevorzugte Ausführungsformen sind mit den in den abhängigen Ansprüchen aufgeführten Merkmalen ausgestattet.

Das erfindungsgemässe Getriebe, welches der Umwandlung einer kontinuierlichen Drehbewegung in einer Drehrichtung, die von einem Elektromotor an seiner Antriebsachse bereitgestellt wird, in eine Bewegung zum Antrieb eines Reinigungselementes dient, ist als ein mehrstufiges Getriebe ausgebildet. Es besitzt wenigstens eine antriebesseitige erste Getriebestufe und wenigstens eine abtriebsseitige zweite Getriebestufe, wobei wenigstens eine Getriebestufe als eine Untersetzung und wenigstens eine Getriebestufe als eine Übersetzung ausgelegt ist. Auf diese Weise wird sichergestellt, dass die vom mehrstufigen Getriebe weitergeleitete Bewegung hinsichtlich Drehzahl und Drehmoment herstellerseitig einfach und flexibel einerseits an die Vorgaben des Elektromotors und andererseits an die gewünschten Bewegungseigenschaften des Reinigungselements angepasst werden kann.

In einer besonders bevorzugten Ausführungsform ist die Übersetzung des Getriebes mit einem Nocken und einer Nockenverlängerung ausgestattet, die es ermöglichen, sowohl eine reversierend schwenkende Bewegungskomponente als auch eine reversierend translatorische Bewegungskomponente oder eine Kombination der beiden für die Abtriebsachse und damit für das Reinigungselement bereitzustellen. Durch Adaption der Geometrie und der Anordnung des Nocken und der Nockenverlängerung kann eine Vielzahl neuartiger, besonders effektiver Putz-Bewegungsmuster der Abtriebsachse und damit auch des Reinigungselements erzeugt werden.

Einige besonders bevorzugte Ausführungsformen des erfindungsgemässen Getriebes bzw. der erfindungsgemässen Elektrozahnbürste werden nachfolgend anhand einer Zeichnung detailliert beschrieben. Die Figuren der Zeichnung zeigen im Einzelnen:
- Fig. 1: in einer perspektivischen Ansicht einen als Griff ausgebildeten Grundkörper einer Elektrozahnbürste mit einem konisch zulaufenden Endbereich, von dem eine Abtriebsachse hervorsteht, auf welche eine in Fig. 2 gezeigte Aufsteckbürste aufsteckbar ist;
- Fig. 2: in einer perspektivischen Ansicht eine Elektrozahnbürste mit dem in Fig. 1 gezeigten Grundkörper und einer auf die Abtriebsachse aufgesteckten Aufsteckbürste mit einem borstenbesetzten Reinigungselement;
- Fig. 3: in einer perspektivischen Ansicht eine weitere Ausführungsform des Grundkörpers der erfindungsgemässen Elektrozahnbürste mit einem abtriebsachsenseitig im konischen Endbereich angeordneten Aufsteckstutzen zur drehfesten Aufnahme einer in Fig. 4 gezeigten, weiteren Ausführungsform der Aufsteckbürste;
- Fig. 4: in einer perspektivischen Ansicht eine erfindungsgemässe Elektrozahnbürste mit dem in Fig. 3 gezeigten Grundkörper und einer aufgesteckten Aufsteckbürste mit einem reversierend oszillierbaren Reinigungselement;
- Fig. 5: in einer Seitenansicht einen Teil des Innenlebens der erfindungsgemässen Elektrozahnbürste, unter anderem ein Innengestell beinhaltend, das in einem in Fig. 3 und 4 gezeigten Grundkörper aufgenommenen ist und in dem ein Elektromotor mit einer Antriebsachse sowie ein erfindungsgemässes Getriebe mit der Abtriebsachse angeordnet sind;
- Fig. 6: in einer perspektivischen Ansicht eine Übersetzung des erfindungsgemässen Getriebes mit einem Kronenrad, auf dem ein Nocken angeordnet ist, der von einem mit der Abtriebsachse fest verbundenen, klammerförmigen Abnehmer abgetastet wird;
- Fig. 7: in einer perspektivischen Darstellung der in Fig. 5 und Fig. 6 gezeigte Abnehmer;
- Fig. 8: in einer perspektivischen Darstellung das Kronenrad mit einem Nocken bekannter Geometrie und Anordnung;
- Fig. 9: in einer perspektivischen Ansicht einen Teil einer Ausführungsform des erfindungsgemässen Getriebes mit dem Kronenrad, auf dessen verzahnter Seitenfläche exzentrisch bezüglich der Drehachse des Kronenrades ein dreiecksförmig abgerundeter Nocken angeordnet ist;
- Fig. 10: in einer perspektivischen Darstellung einen Teil einer weiteren Ausführungsform des erfindungsgemässen Getriebes mit einem dreiecksförmigen Nocken, der konzentrisch bezüglich der Drehachse seines zugeordneten Kronenrades angeordnet ist;
- Fig. 11: in einer perspektivischen Darstellung einen Teil einer weiteren Ausführungsform des erfindungsgemässen Getriebes mit einem fünfeckig abgerundeten, konzentrisch bezüglich der Drehachse seines zugeordneten Kronenrades gelagerten Nocken;
- Fig. 12: in einer perspektivischen Darstellung eine weitere Ausführungsform der Übersetzung des erfindungsgemässen Getriebes mit einem Kronenrad, auf dessen verzahnter Seitenfläche ein Nocken und oberhalb des Nockens eine Nockenverlängerung angeordnet sind, die beide von dem Abnehmer abgetastet werden;
- Fig. 13: in einer Seitenansicht die in Fig. 12 gezeigte Übersetzung;
- Fig. 14: in einer perspektivischen Darstellung das in Fig. 12 und Fig. 13 gezeigte Kronenrad mit einem dreiecksförmig abgerundeten Nocken und einer oberhalb des Nockens, exzentrisch bezüglich der Drehachse des Kronenrades angeordneten Nockenverlängerung, die einen kreisförmigen Querschnitt aufweist und exzentrisch bezüglich der Drehachse des Kronenrades angeordnet ist;
- Fig. 15: in einer perspektivischen Darstellung eine weitere Ausführungsform des Kronenrades mit einem fünfeckförmig abgerundeten Nocken und einer exzentrisch bezüglich der Drehachse des Kronenrades gelagerten, dreiecksförmig abgerundeten Nockenverlängerung;
- Fig. 16 - Fig. 19: in graphischen Darstellungen die Auslenkung der Abtriebsachse als Funktion der Zeit bzw. des Drehwinkels des Kronenrades für verschiedene, jeweils links von den graphischen Darstellungen angegebene Ausführungsformen von Nocken;
- Fig. 20: in einer weiteren graphischen Darstellung die Auslenkung der Abtriebsachse für eine nebenstehend angegebene Ausführungsform eines Nockens mit einer Nockenverlängerung zur Bereitstellung einer kombinierten Bewegungsform mit einer reversierend schwenkenden und einer reversierend translatorischen Bewegungskomponente;
- Fig. 21: in einer perspektivischen, vor allem eine Oberseite zeigenden Ansicht eine Ausführungsform eines Aufsteckbürstengrundkörpers;
- Fig. 22: in einer perspektivischen, vor allem eine Unterseite zeigenden Ansicht der in Fig. 21 gezeigte Aufsteckbürstengrundkörper;
- Fig. 23: in einer perspektivischen, vor allem eine Oberseite zeigenden Ansicht eine Aufsteckbürste mit dem in Fig. 21 und Fig. 22 gezeigten Aufsteckbürstengrundkörper;
- Fig. 24: in einer perspektivischen, vor allem eine Unterseite zeigenden Ansicht die in Fig. 23 gezeigte Aufsteckbürste;
- Fig. 25: in einer Schnittdarstellung die in Fig. 23 und Fig. 24 gezeigte Ausführungsform einer Aufsteckbürste mit einem borstenbesetzten Kopf;
- Fig. 26: in einer Schnittdarstellung eine weitere Ausführungsform einer Aufsteckbürste mit einem bereits in Fig. 4 gezeigten, reversierend oszillierbaren Reinigungselement;
- Fig. 27: in einer perspektivischen, vor allem eine Oberseite zeigenden Ansicht eine weitere Ausführungsform einer Aufsteckbürste, bei welcher das Reinigungselement an einer im Inneren des Halses bewegbaren Aufsteckachse angeordnet ist;
- Fig. 28: in einer perspektivischen, vor allem eine Unterseite zeigenden Ansicht die in Fig. 27 gezeigte Aufsteckbürste;
- Fig. 29: in Draufsicht der Kopf einer Aufsteckbürste mit bezüglich des Halses bewegbaren und stationären Reinigungselementen;
- Fig. 30: in einer teilweise Schnittdarstellung der in Fig. 29 gezeigte Kopf der Aufsteckbürste;
- Fig. 31: in einer Seitenansicht eine weitere Ausführungsform des Kopfes der Aufsteckbürste mit einem gegenüber dem Hals bewegbaren und einem gegenüber dem Hals stationären Reinigungselement;
- Fig. 32: in Draufsicht die Oberseite des in Fig. 31 gezeigten Kopfes der Aufsteckbürste;
- Fig. 33: in Draufsicht die Oberseite des Kopfes einer weiteren Ausführungsform einer Aufsteckbürste mit Borstenbündeln, die von länglichsichelförmigen Grundflächen, deren Längsausdehnungen sich etwa in Längsrichtung des Kopfes erstrecken, abstehen;
- Fig. 34: in Draufsicht die Oberseite des Kopfes einer weiteren Ausführungsform einer Aufsteckbürste mit Borstenbündeln, die von länglichsichelförmigen Grundflächen, deren Längsausdehnungen sich einerseits etwa in Längsrichtung des Kopfes erstrecken und andererseits etwa in Querrichtung des Kopfes erstrecken, abstehen;
- Fig. 35 - Fig. 38: in Draufsichten verschiedene Ausführungsformen reversierend oszillierbarer Reinigungselemente mit unterschiedlichen Anordnungen von Borstenbündeln;
- Fig. 39 - Fig. 41: in Draufsichten auf die Oberseiten von Köpfen verschiedene Ausführungsformen von Aufsteckbürsten mit reversierend oszillierbaren Reinigungselementen und bezüglich des Halses stationär angeordneten weiteren Reinigungselementen.

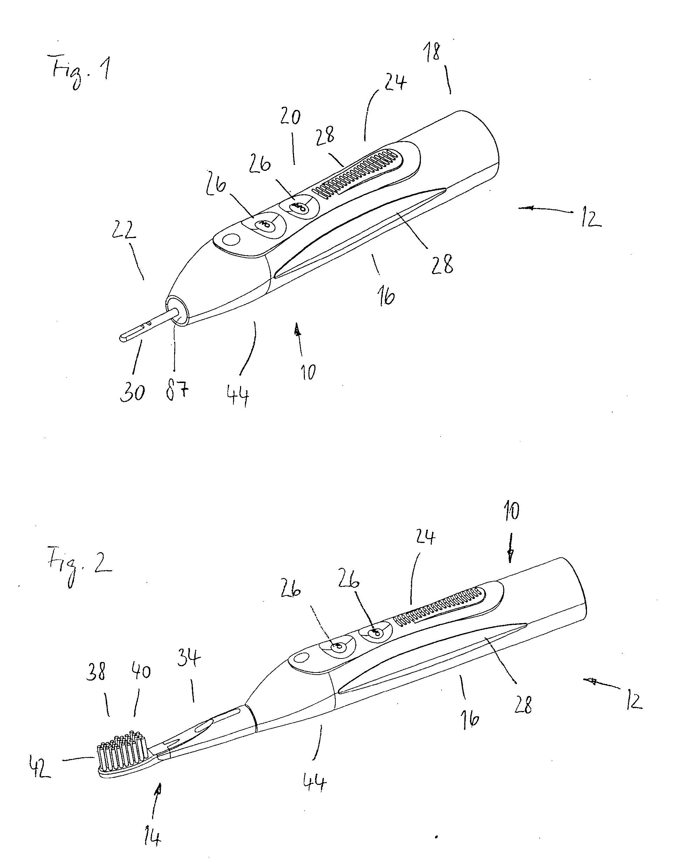

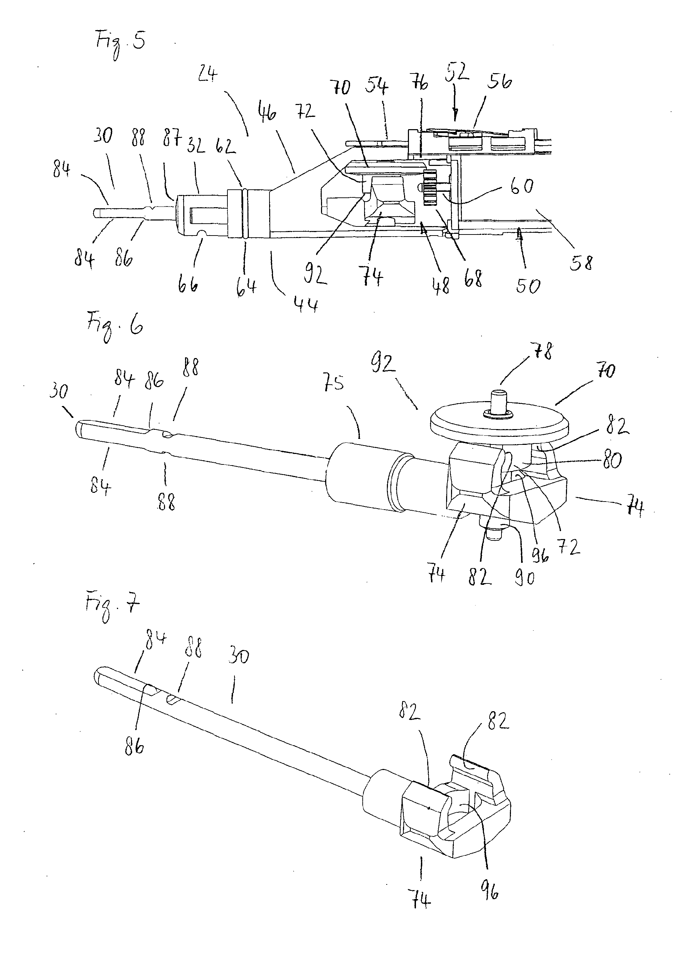

In den Fig. 1 - 4 sind Grundkörper 10 erfindungsgemässer Elektrozahnbürsten 12 gezeigt, auf welche beispielsweise in Fig. 2 und Fig. 4 gezeigte Aufsteckbürsten 14 aufsteckbar sind. Der Grundkörper 10 weist eine im Wesentlichen zylinderartige Aussenkontur auf und bildet einen Griff 16 der Elektrozahnbürste 12. Entlang seiner Längsachse weist der Grundkörper 10 in einem unteren Endbereich einen Aufstellabschnitt 18, einen sich daran anschliessenden Betätigungsabschnitt 20 und einen sich an dem Betätigungsabschnitt 20 anschliessenden Aufsteckabschnitt 22, welcher an einem dem Aufstellabschnitt 18 gegenüberliegenden Endbereich angeordnet ist, auf.

Der Aufstellabschnitt 18 dient einer sicheren Aufstellung der Elektrozahnbürste 12 auf einer festen Unterlage, beispielsweise einer Lade- bzw. Basisstation. Er umfasst einen in den Figuren 1 - 4 nicht sichtbaren Boden, der beispielsweise eben, mit einer Aufstellausformung zur Aufnahme in der Lade- bzw. Basisstation oder mit anderen funktionalen Ausformungen ausgebildet sein kann.

Der Betätigungsabschnitt 20 erstreckt sich etwa über zwei Drittel der Gesamtlänge des Grundkörpers 10 und ist bei der Benutzung der Elektrozahnbürste 12 im Wesentlichen von der Handinnenfläche eines Benutzers umschlossen. Auf einer Oberseite 24 ist er mit von aussen zugänglichen, aus weichelastischem Material geformten Betätigungselementen 26 zur Steuerung von Betriebszuständen der Elektrozahnbürste 12, beispielsweise einem Ein- und Ausschalten, einer kontinuierlichen oder diskreten Verstellung von Betriebszuständen oder Betriebsgeschwindigkeiten usw., ausgestattet. Im Betätigungsabschnitt 20 sind auf der sonst durch ein Hartmaterial gebildeten Oberfläche weichelastische Haftelemente 28, die ein Abrutschen der Hand des Benutzers bei der Benutzung der Elektrozahnbürste 12 verhindern, angeordnet. Bei den in den Fig. 1 - 4 gezeigten Ausführungsformen des Grundkörpers 10 verjüngt sich der Betätigungsabschnitt 20 vorzugsweise kontinuierlich in Richtung des Aufsteckabschnitts 22.

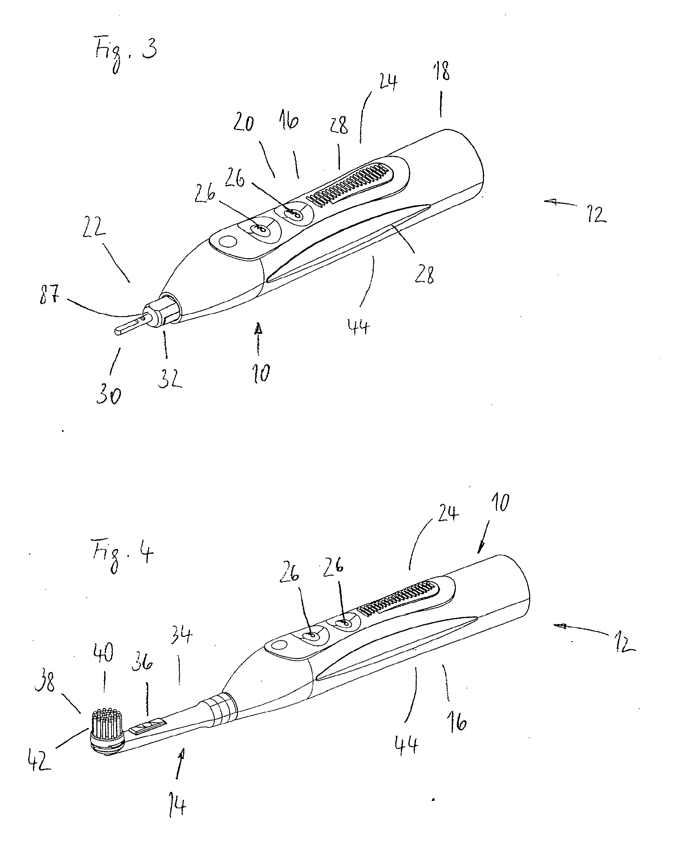

Der Aufsteckabschnitt 22 dient der mechanischen Kopplung der Aufsteckbürste 14 an den Grundkörper 10 der Elektrozahnbürste 12. Er umfasst bei der in Fig. 1 gezeigten Ausführungsform des Grundkörpers 10 einen Endbereich einer Abtriebsachse 30 und bei der in Fig. 3 gezeigten Ausführungsform zusätzlich einen Anschlussstutzen 32 zur drehfesten Aufnahme der Aufsteckbürste 14.

Die Aufsteckbürste 14 weist einen Hals 34 auf, dessen freier Endbereich zum Aufstecken auf den am Grundkörper 10 ausgebildeten Aufsteckabschnitt 22 vorbestimmt ist. Der Hals 34 ist als eine stielartige Verlängerung mit einem abgerundeten Querschnitt, der kleiner ist als der des Grundkörpers 10, ausgestattet. Bei der in Fig. 4 gezeigten Ausführungsform der Aufsteckbürste 14 ist an der Oberseite 24 des Halses 34 ein von aussen zugängliches Stellelement 36 angebracht. Das Stellelement 36 dient der Auswahl eines Schwenkbereiches eines an einem Kopf 38 der Aufsteckbürste 14 bewegbar, bei dieser Ausführungsform insbesondere reversierend rotierbar angeordneten Reinigungselementes 40.

Der Kopf 38 bildet einen sich an den Hals 34 anschliessenden im Allgemeinen sich gegenüber dem Hals 34 verbreiternden freien Endbereich der Aufsteckbürste 14. Er dient der Aufnahme bzw. der Lagerung von Reinigungselementen 40, die bei den in Fig. 2 und Fig. 4 gezeigten Ausführungsformen auf der Oberseite 24 mit Borsten 42 bzw. Bündeln von Borsten 42 besetzt sind. Auf einer in den Fig. 2 und 4 nicht sichtbaren, der Oberseite 24 gegenüberliegenden Unterseite 44 kann der Kopf 34 zudem beispielsweise mit einem Zungenreiniger ausgestattet sein.

Bei der in Fig. 2 gezeigten Ausführungsform der erfindungsgemässen Elektrozahnbürste 12 ist das Reinigungselement 40 fest an der Aufsteckbürste 14 angeordnet und führt in einem aktiven Betriebszustand der Elektrozahnbürste 12 zusammen mit der gesamten Aufsteckbürste 14 die von der Abtriebsachse 30 übertragene reversierende Schwenkbewegung aus. Bei der in Fig. 4 gezeigten Ausführungsform der erfindungsgemässen Elektrozahnbürste ist das Reinigungselement 40 schwenkbar bezüglich des Kopfes 38 und dem Hals 34 gelagert. Im aktiven Betriebszustand der Elektrozahnbürste 12 führt das Reinigungselement eine reversierend rotierende Bewegung um eine Achse, die nahezu rechtwinklig zur Längsachse des Halses 34 verläuft, aus.

Im Inneren des Grundkörpers 10 der Elektrozahnbürste 12 ist ein sogenanntes Innengestell 46 angeordnet. Das Innengestell 46 ist in einer Seitenansicht eines Teils des Innenlebens der Elektrozahnbürste 12 in Fig. 5 gezeigt. Der dargestellte Teil erstreckt sich vom äussersten, aufsteckbürstenseitigen Ende der Abtriebsachse 30 bis etwa zur Längsmitte des Betätigungsabschnitts 20. Am Innengestell 46 sind ein erfindungsgemässes Getriebe 48, eine Antriebseinheit 50 und eine Steuereinheit 52 angeordnet, wobei die beiden letztgenannten in Fig. 5 nur teilweise sichtbar sind.

Die Steuereinheit 52 ist teilweise oberseitig am Innengestell 46 angeordnet und umfasst eine Leiterplatte 54 mit darauf angeordneten Komponenten und ein Schaltelement 56 zum Ein- bzw. Ausschalten des aktiven Betriebszustandes der Elektrozahnbürste 12. Das Schaltelement 56 ist korrespondierend zu den Betätigungselementen 26, die von aussen zugänglich am Grundkörper 10 angeordnet sind, ausgebildet. Die Betätigungselemente 26 sind vorzugsweise aus einem weichelastischen Material ausgeformt und erlauben es, bei ihrer Betätigung Stellkräfte auf das Schaltelement 56 auszuüben.

Die Antriebseinheit 50 umfasst einen in Fig. 5 nicht gezeigten Energiespeicher in Form einer Batterie bzw. eines Akkumulators oder einen Netzanschluss, der jeweils mit einem Elektromotor 58 elektrisch verbunden ist. Der Elektromotor 58 stellt an seiner zugeordneten Antriebsachse 60 eine kontinuierliche Drehbewegung in einer Drehrichtung um 360° bereit. In einem von der Putzwechselwirkung unbelasteten Zustand beträgt die Drehzahl des Elektromotors - bei angeschlossenem Getriebe 48 und aufgesteckter Aufsteckbürste 14 - zwischen 2000 Umdrehungen pro Minute (U/min) bis 12000 U/min, vorzugsweise 3000 U/min bis 8000 U/min. Die Betriebsspannung zur Speisung des Elektromotors 58 beträgt 1,3 V bis 3 V, bei einem Stromfluss im oben definierten unbelasteten Betrieb zwischen 500 mA bis 1500 mA, vorzugsweise 600 mA bis 1200 mA.

Abtriebsseitig schliesst sich am Innengestell 46 an die Antriebseinheit 50 das erfindungsgemässe Getriebe 48 an. Das Getriebe 48 überträgt und wandelt die vom Elektromotor 58 an der Antriebsachse 60 bereitgestellte, im Wesentlichen kontinuierliche Drehbewegung in eine reversierende Bewegung der Abtriebsachse 30. Die durch das nachfolgend detailliert beschriebene erfindungsgemässe Getriebe 48 an der Abtriebsachse 30 bereitgestellte Bewegung kann dabei eine reversierend schwenkende Bewegung um die Längsmittellinie der Abtriebsachse 30, eine reversierend translatorische Hin- und Her-Bewegung in Richtung der Abtriebsachse 30 oder ein kombinierte Bewegung aus reversierend schwenkenden und reversierend translatorischen Bewegungskomponenten sein.

Zur Abdichtung der am Innengestell 46 angeordneten Komponenten 48, 50, 52, 54, 56 und 58 gegen das Eindringen von Flüssigkeiten und Feststoffen in den Grundkörper 10 ist abtriebsachsenseitig am Innengestell 46 eine Dichtungsnut 62 ausgeformt, in welche ein Dichtungs-O-Ring 64 oder eine Lippendichtung eingelegt ist. Der ebenfalls am Innengestell 46 ausgeformte Anschlussstutzen 32 ist, wie das gesamte Innengestell 46, aus einem stabilen Hartmaterial gefertigt und weist unterseitig eine Aufsteckbürstenkerbe 66 auf. Diese Aufsteckbürstenkerbe 66 wirkt mit einem später beschriebenen Element an der Aufsteckbürste 14 zusammen und verhindert ein unerwünschtes Entfernen der Aufsteckbürste 14 vom Grundkörper 10. Zudem ist der Anschlussstutzen 32 mit im Wesentlichen parallel zur Abtriebsachse 30 verlaufenden Kanten ausgestattet, um - wie bereits erwähnt - eine drehfeste Anordnung der Aufsteckbürste 14 am Grundkörper 10 zu gewährleisten.

Zur Lagerung der Abtriebsachse 30 am Innengestell 46 ist das Innengestell 46 abtriebsachsenseitig mit einer entsprechenden, in den Figuren nicht sichtbaren Achsausnehmung ausgestattet. Der Durchmesser der Achsausnehmung ist dabei so gewählt, dass sich die Abtriebsachse 30 frei translatorisch und / oder rotierend darin bewegen kann, das Eindringen von Flüssigkeiten und Feststoffen aber weitestgehend ausgeschlossen ist.

Das Getriebe 48 umfasst neben dem in Fig. 5 sichtbaren Antriebszahnrad 68, welches drehfest auf der Antriebsachse 60 des Elektromotors 58 angeordnet ist, ein insbesondere in Fig. 6 gut sichtbares Kronenrad 70 mit einem auf dessen verzahnter Seitenfläche angeordneten Nocken 72 und einen insbesondere in Fig. 7 gezeigten, mit dem Nocken 72 in Wechselwirkung stehenden Abnehmer 74. Am Abnehmer 74 ist die Abtriebsachse 30 drehfest angeordnet. Die Abtriebsachse 30 ist wiederum drehbar und gegebenenfalls auch verschiebbar in einer Abtriebsachsenhülse 75, die in Fig. 6 sichtbar ist, gelagert. Durch eine Befestigung der Abtriebsachsenhülse 75 am Innengestell 46 ist die Lage des Abnehmers 74 gegenüber dem Innengestell 46 bis auf den gewünschten Schwenk- und gegebenenfalls Verschiebungsfreiheitsgrad festgelegt.

Das stirnverzahnte Antriebszahnrad 68 steht mit aus Vereinfachungsgründen nicht gezeichneten Zähnen des Kronenrades 70 im Eingriff und bildet aufgrund der geringeren Anzahl von Zähnen des Antriebszahnrads 68 gegenüber dem Kronenrad 70 eine Untersetzung 76. Die Untersetzung 76 ist eine erste Getriebestufe des Getriebes 48 in der Form eines Kronenradgetriebes. Das Untersetzungsverhältnis beträgt 0,2 bis 0,9, vorzugsweise 0,4 bis 0,6, d.h. die Drehzahl des Kronenrades 70 ist um das genannte Untersetzungsverhältnis reduziert und das Drehmoment entsprechend erhöhnt. Dabei steht die Antriebsachse 60 des Antriebszahnrades 68 wenigstens nahezu rechtwinklig zur im Innengestell 46 gelagerten Kronenradachse 78 (siehe Fig. 6). Natürlich ist es auch möglich andere Untersetzungsverhältnisse oder Untersetzungssysteme zu realisieren und allenfalls weitere Getriebestufen als Untersetzungen 76 auszulegen.

Auf der verzahnten Seitenfläche des Kronenrades 70 ist der Nocken 72 fest angeformt. Folglich führt eine vollständige Umdrehung des Kronenrades 70 um 360° auch zu einem vollständigen Umlauf des Nockens 72. Der Nocken 72 kann in Form und Anordnung bezüglich der Kronenradachse 70, wie in den Fig. 8 bis 11 beispielhaft gezeigt, verschiedenartig ausgeführt sein. Der Nocken 72 weist in seinen verschiedenen Ausführungsformen jeweils mindestens eine Kurvenwand 80 auf, die sich im Wesentlichen parallel zur Kronenradachse 78 und rechtwinklig zur verzahnten Seitenfläche des Kronenrades 70 erstreckt.

Wie in Fig. 6 gezeigt, umgreift der Abnehmer 74 den Nocken 72 klammerartig und tastet gleitend mittels zwei sich in einem festen Abstand parallel gegenüberliegenden, abgerundeten Abtastkanten 82 die Kurvenwand 80 des Nockens 72 ab. Aufgrund des festen Abstands der Abtastkanten 82 und des von einer Kreisform abweichenden Querschnitts des Nockens 72 bzw. gegebenenfalls dessen exzentrischer Anordnung bezüglich der Kronenradachse 78 wird der Abnehmer 74 zusammen mit der drehfest verbundenen Abtriebsachse 30 um deren Längsmittellinie reversierend innerhalb eines Winkelbereichs kleiner als 360° verschwenkt. Aufgrund der Schwenkbewegung des Abnehmers 74 und des dadurch unterschiedlichen Abstands der Abtastkanten 82 vom Kronenrad 70 kann es von Vorteil sein, den Nocken 72 in Richtung der Kronenradachse 78 leicht bombiert oder fässchenförmig zu gestalten. Dadurch wird die Schwenkbewegung des Abnehmers 74 und eine Verringerung des auf eine Ebene parallel zur verzahnten Seitenfläche des Kronenrades 70 projizierten Abstandes zwischen den Abtastkanten 82 ausgeglichen. Bei einer Schwenkbewegung mit kleinen Auslenkungen kann dieser Umstand vernachlässigt werden.

Da das Reinigungselement 40 entweder fest an der Aufsteckbürste 14 angeordnet und die Aufsteckbürste 14 direkt auf die Abtriebsachse 30 drehfest aufgesteckt ist - wie bei der in Fig. 2 gezeigten Ausführungsform der Elektrozahnbürste 12 - oder aber über eine Aufsteckachse mit einem Auslenkelement indirekt mit der Abtriebsachse 30 verbunden ist - wie bei der in Fig. 4 gezeigten Ausführungsform der Elektrozahnbürste 12 - wird die reversierende Schwenkbewegung der Abtriebsachse 30 auf das Reinigungselement 40 übertragen.

Die Abtriebsachse 30 selbst hat einen nahezu konstanten Durchmesser über ihre gesamte Länge, der zwischen 2 mm und 6 mm, vorzugsweise zwischen 2,5 mm und 4 mm beträgt. Aufsteckbürstenseitig ist die Abtriebsachse 30 in ihrem Endbereich beidseitig mit Abflachungen 84 versehen. Die Abflachungen 84 haben die Aufgabe, im Zusammenwirken mit entsprechenden Gegenflächen der Aufsteckbürste 14 bzw. der Aufsteckachse ein Drehmoments zu übertragen. Natürlich ist es auch möglich, die Abtriebsachse 30 mit nur einer Abflachung 84 auszustatten. Der verbleibende Querschnitt der Abtriebsachse 30 beträgt im Bereich der Abflachungen 84 0,5 mm bis 3,5 mm, vorzugsweise 1,5 mm bis 2,5 mm. Die Länge der Abflachungen 84 entlang der Abtriebsachse 30 beträgt zwischen 8 mm und 14 mm, vorzugsweise zwischen 10 mm und 12 mm.

Beim Übergang vom abgeflachten Querschnitt der Abtriebsachse 30 zu ihrem vollen Kreisquerschnitt sind nahezu ebene Schultern 86 ausgeformt. Die Schultern bilden einen Winkel mit der Längsmittellinie der Abtriebsachse 30 von 30° bis 60°, vorzugsweise von 40° bis 50°. Der Beginn der Schultern 86 ist etwa 15 mm bis 22 mm, vorzugsweise 17,5 mm bis 19,5 mm von einer aufsteckabschnittsseitigen Stirnseite 87 des Grundkörpers 10 (ohne Anschlussstutzen 32) aus gemessen positioniert.

In Richtung des Abnehmers 74 folgen nach den Abflachungen 84 auf der Abtriebsachse 30 eine, wie in Fig. 5 gezeigt, oder zwei, wie in Fig. 6 gezeigt, sich gegenüberliegend angeordnete Kerben 88. Die Kerben 88 vermitteln der Aufsteckbürste 14 bzw. der Aufsteckachse einen Halt in axialer Richtung und verhindern so ein unerwünschtes Entfernen oder unkontrolliertes Abfallen der Aufsteckbürste 14.

Die Kerben 88 sind in einem Abstand von etwa 12 mm bis 20 mm, vorzugsweise 15 mm bis 17 mm von der Stirnfläche 87 entfernt angeordnet. Sie weisen vorzugsweise eine Tiefe von 0,2 mm bis 0,8 mm, vorzugsweise von 0,35 mm bis 0,65 mm auf. Ein Boden der Kerben 88 hat etwa eine Breite von 0,3 mm bis 1,5 mm, vorzugsweise von 0,7 mm bis 1,1 mm.

Die Abtriebsachse 30 ist aufsteckbürstenseitig in ihrem Endbereich verrundet, um die Verletzungsgefahr zu vermindern und den Montagevorgang beim Aufstecken der Aufsteckbürste 14 zu erleichtern.

Die Abtriebsachse 30 ist vorzugsweise aus einem Metall, beispielsweise rostfreiem Stahl, gefertigt und weist eine freie Länge von der Stirnfläche 87 aus gemessen von 25 mm bis 35 mm, vorzugsweise von 28 mm bis 32 mm auf.

Bei allen Aufsteckbürsten 14, bei welchen der Hals 34 mitbewegt wird, besteht zwischen der Stirnfläche 87 und dem halsseitigen Ende der Aufsteckbürste 14 ein freier Abstand, um Berührungen und somit Reibungsverluste zwischen der Aufsteckbürste 14 und dem Grundkörper 10 zu vermeiden. Dieser Abstand beträgt zwischen 0,2 mm und 0,8 mm, vorzugsweise zwischen 0,4 mm und 0,6 mm.

Nachfolgend werden nun verschiedene Ausführungsformen von Kronenrädern 70 mit darauf angeordneten Nocken 72 anhand der Figuren 8 - 11 beschrieben. Auch in diesen Figuren sind die Zähne der Kronenräder 70 aus Vereinfachungsgründen nicht gezeichnet und nur symbolisch durch einen Ring dargestellt. Auf den Nocken 72 gegenüberliegend der verzahnten Seitenfläche des Kronenrads 70 sind jeweils zylinderförmige Kronachshülsen 90 ausgeformt. Sie dienen der Abstützung des Kronenrades 70 entlang der Kronenradachse 78 gegenüber dem Innengestell 46.

In Fig. 8 ist eine bekannte Ausführungsform eines Nockens 72 gezeigt. Dieser Nocken 72 weist einen ovalen Querschnitt auf und ist exzentrisch bezüglich der Kronenradhülse 90 und der nicht eingezeichneten Kronenradachse 78 angeordnet.

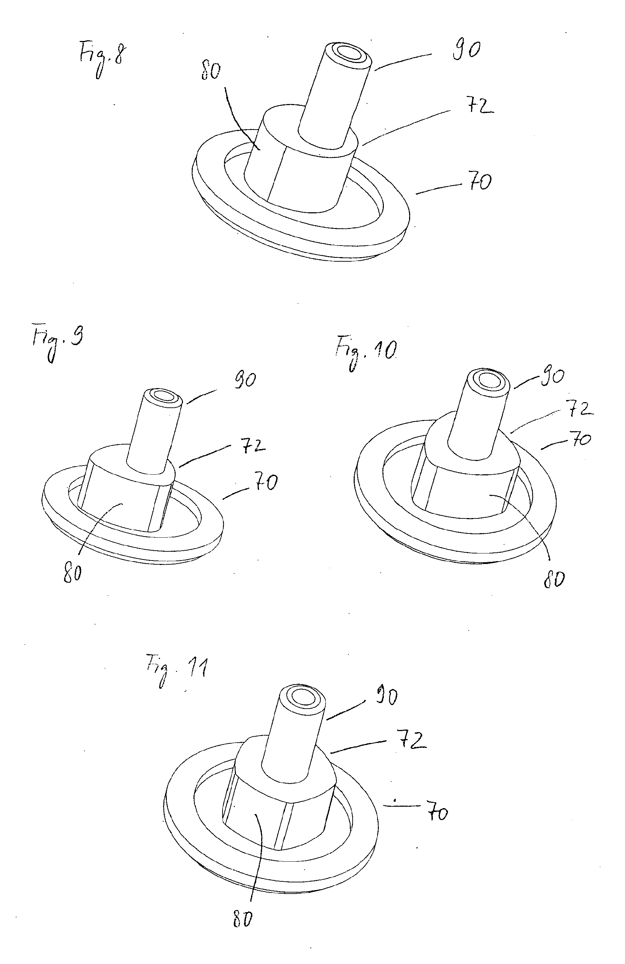

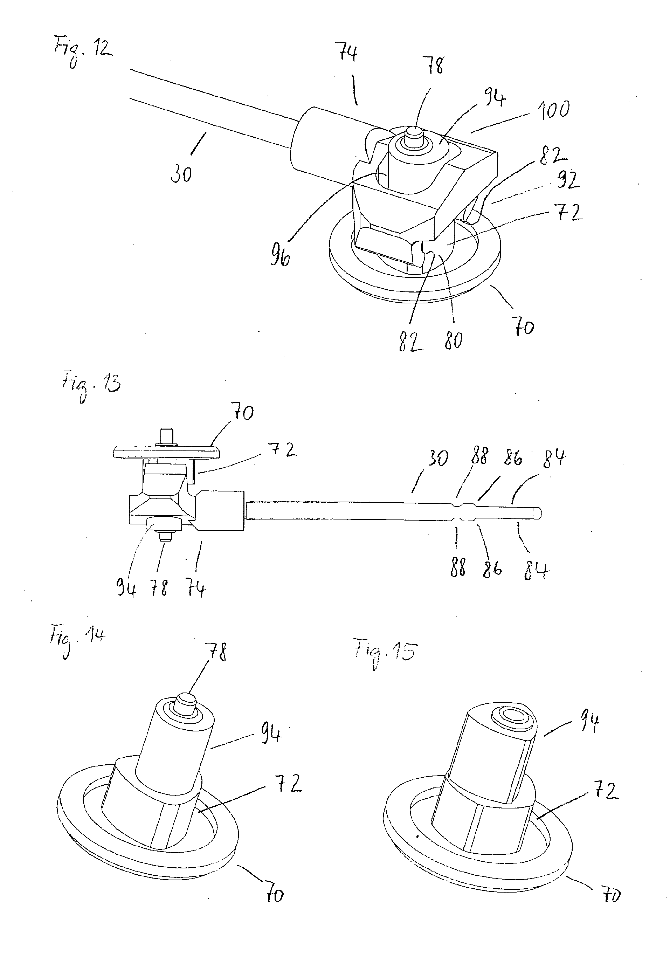

In den Fig. 9 bis 11 sind erfindungsgemässe Ausführungsformen des Nockens 72 dargestellt. Die Querschnitte der Nocken 72 weisen jeweils eine allseitig abgerundete Form einen n-Ecks auf, wobei n eine ungerade positive Zahl ist. So sind in den Fig. 9 und 10 Nocken mit einem im Wesentlichen dreiecksförmigen Querschnitt und in Fig. 11 ein Nocken mit einem im Wesentlichen fünfeckförmigen Querschnitt gezeigt.

Die Kurvenwände 80 der Nocken 72 sind dabei stets verrundet und beinhalten auch die Ecken der jeweiligen n-Eckform, um eine gleitende Abtastung durch die Abtastkanten 82 des Abnehmers 74 zu ermöglichen. Der Rundungsradius beträgt für die Ecken bei dem dreiecksförmigen Querschnitt 1,32 mm und bei dem fünfeckförmigen Querschnitt 0,5 mm. Der Radius der Rundung der Seiten beträgt beim dreiecksförmigen Querschnitt 7.27 mm und beim fünfeckförmigen Querschnitt 14.44 mm. Generell gilt, dass der Rundungsradius für die Ecken mit grösser werdendem n abnimmt, also gegen 0 mm geht und dass der Radius für die Rundung der Seiten mit grösser werdendem n zunimmt.

Die Querschnittsformen der Nocken 72 müssen aufgrund des festen Abstandes der Abtastkanten 82 voneinander entsprechend ausgestaltet sein und insbesondere einen Umkreis besitzen. Vorzugsweise sind die Querschnitte der Nocken als abgerundete regelmässige n-Ecke ausgeführt. Die Kurvenwände 80 der Nocken 72 sind dabei jeweils derart ausgeformt, dass jede von den Kurvenwänden 80 begrenzte, in einer Querschnittsebene des Nockens 72 durch den Mittelpunkt seiner Querschnittsform verlaufende Querschnittslänge etwa die gleiche Länge besitzt.

Die im Wesentlichen n-eckförmigen Nocken 72 können sowohl exzentrisch bezüglich der Kronenradachse 78 als auch, wie in Fig. 10 und 11 gezeigt, konzentrisch bezüglich der Kronenradachse 78 angeordnet sein. Für n-eckige Querschnittsformen des Nockens 72 ergibt sich bei einer vollständigen Umdrehung des Kronenrades 70 um 360° ein n-fach reversierendes Verschwenken des Abnehmers 78 und der damit verbundenen Abtriebsachse 30.

Bei einer exzentrischen Anordnung eines n-eckigen Nockens 72 wird eine "grosse" reversierende Verschwenkung des Abnehmers von zusätzlichen n "kleineren" Verschwenkungen überlagert. Aufgrund der exzentrischen Anordnung des Nockens 72 kann z.B. eine dominante Grundverschwenkung mit einem "grossen" Schwenkbereich von mehreren "kleineren" Schwenkbewegungen überlagert sein. In diesem Fall schwenkt die Abtriebsachse 30 genau ein Mal pro Umdrehung des Kronenrades 70 auf Grund der exzentrischen Anordnung des Nockens 72 und n Mal aufgrund der n-eckigen Ausgestaltung des Nockens 72. Diese Anordnung wird nachfolgend im Zusammenhang mit Fig. 19 detailliert beschrieben.

Für n > 1, d.h. für Nocken 72 mit 3, 5, 7... - förmigen Querschnittsformen bildet die Kombination des Nockens 72 mit den Abnehmer 74 eine abtriebsseitige zweite Getriebestufe in Form einer zahnradfreie Übersetzung 92 (siehe beispielsweise Fig. 6). Die entsprechenden Übersetzungsverhältnisse 3, 5, 7 ... bewirken eine Erhöhung der Schwenkfrequenz des Abnehmers 74 gegenüber der Drehzahl des Kronenrades 70 um eben diese genannten Übersetzungsverhältnisse. Die Auslenkung des Abnehmers 74 bewirkt insgesamt (total) je nach der spezifischen Querschnittsform des Nockens 72 eine Auslenkung des Abnehmers 74 bzw. des mit ihm verbundenen Reinigungselements 40 zwischen 1° und 20°, vorzugsweise zwischen 3° und 15°, besonders bevorzugt etwa 10°. Natürlich ist es auch möglich weitere Übersetzungsverhältnisse einzustellen oder weitere Übersetzungen 92 bzw. Untersetzungen 76 vor-, parallel-oder nachzuschalten.

Die zweite Getriebestufe ist vorzugsweise im Grundkörper 10 der Elektrozahnbürste 12 untergebracht. Selbstverständlich wäre es aber auch denkbar, dass wenigstens eine der beiden Getriebestufen in der Aufsteckbürste 14 angeordnet ist.

Natürlich ist diese spezielle Ausgestaltung mittels Nocken 72 und Abnehmer 74 nur beispielhaft und es können andere hier nicht gezeigte Mittel eingesetzt werden um' die mindestens zweite, übersetzende Getriebestufe zu realisieren. Vorzugsweise wird aber diese zweite Getriebestufe nicht mittels Verzahnung, sondern mittels Kurven oder Nocken und entsprechend geformten Abnehmern realisiert.

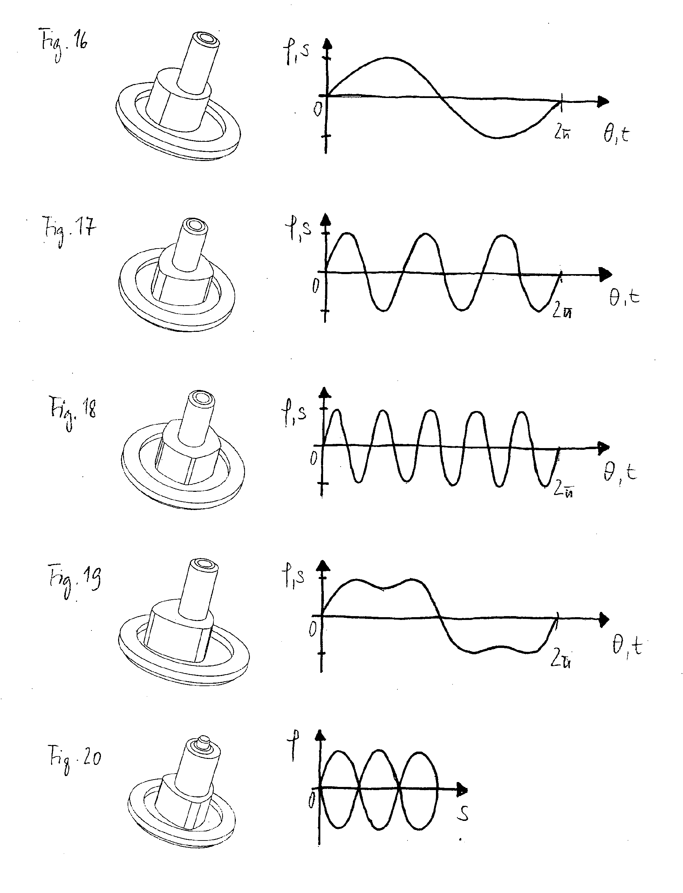

Die jeweils mit den spezifischen Ausführungen von Nocken 72 an der Abtriebsachse 30 hervorgerufenen reversierenden Schwenkbewegungen werden nachfolgend im Zusammenhang mit den Figuren 16 bis 19 detailliert beschrieben. In Fig. 12 ist ähnlich wie der Darstellung in Fig. 6 eine Baueinheit bestehend aus dem Kronenrad, dem Nocken 72, dem Abnehmer 74 und der damit verbundenen Abtriebsachse 30 gezeigt. Im Unterschied zu den bisher beschriebenen Ausführungsformen ist jedoch in diesem Fall die in den Fig. 8 bis 11 gezeigte Kronachshülse 90 durch eine Nockenverlängerung 94 ersetzt. Diese Nockenverlängerung 94 durchgreift eine Abtastausnehmung 96 im Abnehmer 74. Die Abtastausnehmung 96 weist einen durch eine Abtastwand 98 begrenzten abgerundeten Querschnitt auf, innerhalb dessen die Nockenverlängerung 94 eine möglichst reibungsarme Drehbewegung um die Kronenradachse 78 ausführen kann und gleichzeitig eine Schwenkbewegung des Abnehmers 74 um die Abtriebsachse 30 ermöglicht wird.

Die Nockenverlängerung 94 weist in der in Fig. 12 und Fig. 13 gezeigten Ausführungsform einen ovalen Querschnitt auf, ist aber exzentrisch bezüglich der Kronenradachse angeordnet. Infolgedessen wird bei einer Umdrehung des Kronenrades 70 der Abnehmer 74 nicht nur um die Abtriebsachse 30 geschwenkt, sondern aufgrund des Eingriffs der Nockenverlängerung 94 in die Abtastausnehmung 96 gleichzeitig auch in Richtung der Abtriebsachse 30 reversierend translatorisch hin- und herbewegt. Eine genaue Beschreibung der Bewegungsform erfolgt im Zusammenhang mit Fig. 20.

In Fig. 13 ist die in Fig. 12 gezeigte Anordnung nochmals in einer Seitenansicht dargestellt, wobei nun insbesondere der Durchgriff der Nockenverlängerung 94 durch die Abtastausnehmung 96 deutlich zu erkennen ist. Das in dieser Anordnung Verwendung findende Kronenrad 70 mit einem konzentrisch angeordneten, im Wesentlichen dreiecksförmig abgerundeten Nocken 72 und einer oberhalb des Nockens 72 platzierten Nockenverlängerung 94, die einen im Wesentlichen ovalen Querschnitt aufweist und exzentrisch bezüglich der Kronenradachse 78 angeordnet ist, wird nochmals in Fig. 14 freigestellt und vergrössert gezeigt.

Alle bisher in Bezug auf den Nocken 72 genannten Merkmale hinsichtlich seiner Querschnittsform und der Anordnung relativ zur Kronenradachse 78 können auch auf die Nockenverlängerung 94 übertragen werden. Konkret bedeutet dies, dass auch die Nockenverlängerung 94 mit einem abgerundeten, im Wesentlichen n-eckförmigen Querschnitt ausgestattet sein kann, wobei n eine ungerade positive Zahl ist und für n > 1 die Bildung einer zahnradfreien weiteren Übersetzung 100 bewirkt ist. Insbesondere kann die Nockenverlängerung 94 dabei sowohl exzentrisch, wie auch konzentrisch bzw. koaxial bezüglich der Kronenradachse 78 angeordnet sein. Zudem ist die Nockenverlängerung 94 derart ausgeformt, dass jede von ihrer äusseren Wand zweiseitig begrenzte, in einer Querschnittsebene der Nockenverlängerung 94 durch den Mittelpunkt ihrer Querschnittsform verlaufende Querschnittslänge wenigstens nahezu gleich lang ist.

Ein Beispiel für eine Nockenverlängerung 94 mit einem dreiecksförmig abgerundeten Querschnitt, die exzentrisch bezüglich der Kronenradachse 78 angeordnet ist, ist in Fig. 15 gezeigt. Dabei ist die Nockenverlängerung 94 mit einem fünfeckförmig abgerundeten Nocken 72 auf dem Kronenrad 70 kombiniert. Der Nocken 72 ist hier konzentrisch bzw. koaxial bezüglich der Kronenradachse 78 angeordnet. Ein dadurch an der Abtriebsachse 30 erzeugbares Bewegungsmuster wird nachfolgend im Zusammenhang mit Fig. 20 erläutert.

An dieser Stelle sei erwähnt, dass es natürlich auch möglich ist, die in den Figuren 14 und 15 gezeigten Ausführungsformen von Nocken 72 zylindrisch auszuformen und konzentrisch bezüglich des Kronenrades 70 anzuordnen. In diesem Fall wird die Abtriebsachse 30 lediglich reversierend translatorisch hin und her bewegt und nicht verschwenkt. Der zylindrisch ausgeformte, konzentrisch angeordnete Nocken 72 stabilisiert den Abnehmer 74 seitlich und verhindert die Schwenkbewegung. Im umgekehrten Fall, wenn nur eine Schwenkbewegung realisiert wird, ist die Nockenverlängerung 94 zylindrisch und konzentrisch ausgeformt und stabilisiert den Abnehmer 74 in Richtung der Abtriebsachse 30 und verhindert die Translationsbewegung.

Die durch die Rotation der Nockenverlängerung 94 hervorgerufene reversierende translatorische Hin- und Herbewegung ruft an der Abtriebsachse 30 eine Verschiebung in ihrer Längsrichtung zwischen 0,5 mm und 2 mm, vorzugsweise zwischen 0,5 mm und 1,5 mm, hervor. Eine reversierend translatorische Bewegungskomponente des Reinigungselements 40 kann beispielsweise in der in Fig. 2 gezeigten Ausführungsform einer erfindungsgemässen Elektrozahnbürste 12 verwirklicht sein. Dabei ist jedoch zu beachten, dass in diesem Fall geeignete Sicherheitsmassnahmen ergriffen werden müssen, damit durch die vom Grundkörper 10 abhebende Aufsteckbürste 14 keine Körperteile bzw. Hautbereiche des Benutzers eingeklemmt werden können. Eine derartige Sicherheitsmassnahme ist beispielsweise das Einfügen eines balgartigen Schlauches zwischen dem Endbereich des Aufsteckabschnitts 22 des Grundkörpers 10 und dem freien Endbereich des Halses 34 der Aufsteckbürste 14 oder ähnliche Mittel aus weichelastischem Material, welche den entstehenden Spalt durch die translatorische Bewegung der Aufsteckbürste 14 minimal halten. Eine andere Sicherheitsmassnahme besteht darin, die Aufsteckbürste 14 innerhalb des Grundkörpers 10 enden zu lassen und so die Einklemmgefahr zu bannen.

Anhand der Figuren 16 bis 20 werden nun die Bewegungsmuster erläutert, welche mit den jeweils links nebenstehend gezeigten Einheiten, bestehend aus dem Kronenrad 70, dem Nocken 72, der Kronachshülse 90 bzw. der Nockenverlängerung 94, erzielt werden können. In den graphischen Darstellungen der Figuren 16 bis 19 repräsentiert die Ordinate jeweils einen Auslenkungswinkel ϕ bei der Schwenkung der Abtriebsachse 30. Bei einer reversierend translatorischen Bewegung der Abtriebsachse 30, die beispielsweise durch eine Positionsvertauschung des jeweils gezeigten Nockens 72 mit der zugeordneten Kronachshülse 90 erfolgen kann, repräsentiert die Ordinate ebenso eine Auslenkungslänge s. Auf der Abszisse ist jeweils die Zeit t bzw. der entsprechende Drehwinkel θ des Kronenrades 70 aufgetragen. Der Auslenkungswinkel ϕ ist jeweils für eine vollständige Umdrehung (Drehwinkel θ = 0..2π bzw. 0..360°) des Kronenrades 70 dargestellt.

Bei Verwendung eines Nockens 72 mit ovalem Querschnitt, der exzentrisch bezüglich der Kronenradachse 78 gelagert ist, ergibt sich eine sinusförmige Funktion des Auslenkungswinkels ϕ bei der Umdrehung des Kronenrades 70 (Fig. 16). In diesem speziellen Fall wird keine Übersetzung 92 durch die zweite Getriebestufe realisiert, sondern nur eine Umlenkung in eine reversierende Schwenkbewegung der Abtriebsachse 30. Der genaue Startpunkt der Kurve hängt von der Position des Kronenrades 70 relativ zum Abnehmer 74 ab, die Kurvenform an sich bleibt allerdings gleich.

Bei Verwendung eines Nockens 72 mit einem im Wesentlichen dreiecksförmig abgerundeten Querschnitt und einer zentrischen Anordnung bezüglich der Kronenradachse 78 ergibt sich ein Übersetzungsverhältnis von 3, was in der graphischen Darstellung von Fig. 17 durch eine sinusförmige Funktion mit drei Auslenkungsperioden innerhalb einer Umdrehung des Kronenrades 70 zum Ausdruck kommt. Wäre der Nocken 72 zusätzlich exzentrisch bezüglich der Kronenradachse 78 angeordnet, so wären diese drei aufeinanderfolgenden Schwingungsperioden zusätzlich durch eine sinusförmige Auslenkung mit einer Periode innerhalb der Umdrehung des Kronenrades 70, wie beispielsweise in Fig. 16 gezeigt, moduliert. Die Phasenbeziehung zwischen den beiden sinusförmigen Komponenten hängt dabei von der genauen Lage der Ecken des Nockens 72 zur Kronenradachse 78 ab (siehe auch Fig. 19).

In der graphischen Darstellung von Fig. 18 ist der Auslenkungswinkel ϕ der Abtriebsachse 30 in Abhängigkeit vom Drehwinkel θ des Kronenrades 70 bzw. der Zeit für einen im Wesentlichen fünfeckigen Nocken 72, der konzentrisch bezüglich der Kronenradachse 78 angeordnet ist, gezeigt. In diesem Fall durchläuft der Auslenkungswinkel ϕ fünf sinusförmige Perioden bei einer Umdrehung des Kronenrades 70. Es liegt folglich ein Übersetzungsverhältnis von 5 vor.

In Fig. 19 ist ein Bewegungsmuster für den im Zusammenhang mit Fig. 17 bereits erwähnten Fall eines im Wesentlichen dreieckigen Nockens 72, der exzentrisch bezüglich der Kronenradachse 78 gelagert ist, dargestellt. Dabei ist der Nocken 72 entlang einer winkelhalbierenden, vom Mittelpunkt des Umkreises des Nockenquerschnitts in Richtung einer Ecke verschoben. Folglich ergibt sich die funktionelle Abhängigkeit des Auslenkungswinkels ϕ vom Drehwinkel θ des Kronenrades 70 im Wesentlichen durch eine Überlagerung der in Fig. 16 und Fig. 17 dargestellten funktionellen Abhängigkeiten. Ein derartiger Funktionsverlauf führt zu einer zitterartigen Auslenkung des fest an der Abtriebsachse 30 angeordneten Reinigungselements 40. Durch eine geeignete Wahl der Anzahl n von Ecken des Nockenquerschnitts und eine bestimmte Lage des Nocken 72 bezüglich der Kronenradachse 78 lässt sich eine Vielzahl von Auslenkungsmustern durch Überlagerung zweier sinusförmiger Schwingungen erzeugen.

In Fig. 20 ist das Bewegungsmuster der Abtriebsachse 30 unter einem zusätzlichen Einfluss der Nockenverlängerung 94 dargestellt. Dabei ist, wie in den vorhergehenden Bewegungsdiagrammen, auf der Ordinate der Auslenkungswinkel ϕ der Abtriebsachse 30 aufgetragen. Die Abszisse repräsentiert in diesem Fall eine Auslenkungslänge s der Abtriebsachse 30. Auch in diesem Fall ist das Bewegungsmuster für eine vollständige Umdrehung des Kronenrades 70 um einen Drehwinkel von 2π (360°) dargestellt.

Ähnlich wie bei der Darstellung in Fig. 17 bewirkt die reversierend schwenkende Bewegungskomponente eine sinusförmige Variation des Auslenkungswinkel ϕ für drei Perioden innerhalb eines Kronenradumlaufs. Gleichzeitig verursacht die Nockenverlängerung 94 mit einer Querschnittsgeometrie und Anordnung wie der in Fig. 16 gezeigte Nocken 72 eine reversierend translatorische Hin-und Her-Bewegung entlang der Abtriebsachse 30. Aufgrund der Frequenzverhältnisse durchläuft ein Arbeitspunkt in diesem Diagramm bei einer Hinbewegung zunächst 1,5 Auslenkungsperioden des Auslenkungswinkels ϕ und auf der Rückbewegung spiegelbildlich bezüglich der Abszisse die verbleibenden 1,5 Perioden. In der gewählten Darstellung von Fig. 20 ergibt sich somit eine geschlossene Kurve mit drei nahezu ellipsenförmigen Kurvenelementen. Auch in diesem Fall kann eine Vielzahl von Bewegungsmustern durch Variation der Querschnitte des Nockens 72 und der Nockenverlängerung 94 sowie der Wahl verschiedener Positionierungen des Nockens 72 bzw. der Nockenverlängerung 74 bezüglich der Kronenradachse 78 erreicht werden.

In der nachfolgenden Tabelle werden beispielhaft einige Bewegungsformen in Abhängigkeit von der Lage und Querschnittsform des Nockens 72 bzw. der Nockenverlängerung 74 aufgeführt.

| **Bewegungsform der Abtriebsachse 30** | **Nocken 72: Querschnittsform, Lage bezüglich der Kronenradachse 78** | **Nockenverlängerung 94: Querschnittsform, Lage bezüglich der Kronenradachse 78** |
|---|---|---|
| schwenkend (einfach) | oval, exzentrisch | oval, konzentrisch |
| n mal schwenkend | n-eckig, konzentrisch | oval, konzentrisch |
| translatorisch hin- und her bewegend (einfach) | oval, konzentrisch | oval, exzentrisch |
| n mal translatorisch hin- und her bewegend | oval, konzentrisch | n-eckig, konzentrisch |
| schwenkend (einfach) mit Überlagerung n mal schwenkend | n-eckig, exzentrisch | oval, konzentrisch |
| translatorisch hin- und her bewegend (einfach) mit Überlagerung n mal translatorisch hin- und her bewegend | oval, konzentrisch | n-eckig, exzentrisch |
| n mal schwenkend mit translatorisch hin- und her bewegend (einfach) | n-eckig, konzentrisch | oval, exzentrisch |
| n mal schwenkend mit n mal translatorisch hin- und her bewegend | n-eckig, konzentrisch | n-eckig, konzentrisch |
| schwenkend (einfach) mit Überlagerung n mal schwenkend und translatorisch hin- und her bewegend (einfach) | n-eckig, exzentrisch | oval, exzentrisch |
| schwenkend (einfach) mit Überlagerung n mal schwenkend und translatorisch hin- und her bewegend mit Überlagerung n mal translatorisch hin und her bewegend | n-eckig, exzentrisch | n-eckig, exzentrisch |

In der obigen Tabelle bedeutet die Bemerkung "einfach", dass pro vollständige Umdrehung des Kronenrades 70 genau eine vollständige Schwenkperiode für den Auslenkungswinkel ϕ durchlaufen wird. Wie bereits vorhergehend erwähnt, ist die Variable n durch eine ungerade positive Zahl, beispielsweise 3, 5, 7, 9 usw. zu ersetzen. Aus der obigen Tabelle ist ersichtlich, dass eine Vielzahl von Schwenkbewegungen sowie Hin- und Herbewegungen zu komplexen Bewegungsmustern der Abtriebsachse 30 und der damit verbundenen Reinigungselemente 40 führen können. Diese können angepasst werden, um eine optimale Reinigung der Zähne und der dentalen Zwischenräume, wie auch eine verbesserte Durchblutung des Zahnfleisches mittels entsprechender Massagebewegungen hervorzurufen. Intensive Tests mit Putzrobotern haben gezeigt, dass hochfrequente Bewegungen mit kleinerer Auslenkung die besten Reinigungswerte, insbesondere im Interdentalbereich erzielen. Dabei haben sich insbesondere oben beschriebene sich überlagernde Bewegungsmuster bewährt. Es ist insbesondere gelungen die Bewegungsmuster der sogenannten Bass-Methode, welche für manuelle Zahnbürsten angewendet wird, mit der oben beschriebenen Methode zu perfektionieren.

Die Schwenkbewegung des bewegbaren Reinigungselements 40 wird mit einer Frequenz zwischen 3000 U/min und 15000 U/min vorzugsweise von 10000 U/min bis 12000 U/min realisiert. Die translatorische Hin- und Herbewegung des Reinigungselements 40 wird mit einer Frequenz zwischen 1000 U/min und 12000 U/min vorzugsweise zwischen 2000 U/min und 4000 U/min realisiert.

Für alle beschriebenen Ausführungsformen von Getrieben 48 sei erwähnt, dass das Spiel zwischen den Zähnen des Antriebszahnrades 68 und des Kronenrades 70 sowie zwischen den Nocken 72 und den Abtastkanten 82 sowie der Nockenverlängerung 94 und den Abtastwänden 98 möglichst gering gehalten ist, um Schläge im System und eine Geräuschbelästigung ausserhalb des Grundkörpers 10 möglichst gering zu halten. Zusätzlich können die ineinandergreifenden bzw. aneinander gleitenden Elemente mit einem Gleitmittel, beispielsweise Silikonfett versehen sein, um mögliche Reibungseffekte zu verringern. Ebenso ist es möglich, die in der Regel aus einem Hartmaterial gefertigten Komponenten des Getriebes 48 komplett oder an bestimmten Kontakt- oder Lagerstellen mit einem dämpfenden Kunststoff auszustatten, um eine möglichst gleichmässige und geräuscharme Umwandlung der Bewegungen zu erzielen. Zudem können beispielsweise die Abtriebsachse 30 und die Antriebsachse 60 mehrteilig ausgelegt sein, wobei die einzelnen Teil über Kupplungselemente aus einem dämpfenden Kunststoff miteinander verbunden sind. Aufgrund dadurch ermöglichter Torsionsbewegungen der Achsen ist ein weicher Anlauf der Bewegungen möglich und eine Verletzungsgefahr durch abrupte Bewegungen wird vermindert. Eine solche "weiche Lagerung" kann auch ohne unterbrechen der Abtriebsachse 30 gestaltet werden, indem beispielsweise die Verbindung zwischen Abnehmer 74 und Abtriebsachse 30 weich gestaltet wird, das heisst, dass eine weiche Schicht zwischen den beiden Elementen 74, 30 aufgetragen wird. Zur Geräuschreduktion können auch entsprechende Lagerungen entworfen werden, welche die Schwingungsübertragung via die Abtriebesachse 30 dämpfen.

Ebenso ist es beispielsweise möglich, die Abtastkanten 82 bzw. die Abtastwände 98 mit einer weichelastischen Schicht zu überziehen oder den gesamten Abnehmer 74 aus einem etwas weicheren Material herzustellen. Weiterhin können zur Lärmminderung im Inneren des Grundkörpers bestehende Hohl- bzw. Resonanzräume mit schalldämmenden Material aufgefüllt werden.

Im Folgenden werden anhand der weiteren Figuren verschiedene Ausführungsformen von Aufsteckbürsten 14 und Konfigurationen von Köpfen 38 und Reinigungselementen 40 sowie den auf ihnen angeordneten Borsten 42 detailliert beschrieben. Diese Reinigungselemente 40 eignen sich insbesondere im Zusammenhang mit den oben beschriebenen Bewegungsmustern und verstärken deren Wirkung.

In Fig. 21 ist ein aus Hartmaterial gefertigter Aufsteckbürstengrundkörper 102 einer Aufsteckbürste 14, die beispielsweise auf den in Fig. 1 gezeigten Grundkörper 10 aufsteckbar ist und eine reversierend schwenkende Bewegung ausführen kann, gezeigt. Der Aufsteckbürstengrundkörper 102 ist vorzugsweise mittels einer Spritzgusstechnik hergestellt. Er vermittelt der Aufsteckbürste 14 eine Grundstabilität und dient als deren Rückgrat. Im halsseitigen Endbereich des Aufsteckbürstengrundkörpers 102 ist eine Öffnung 104 einer Achsaufnahme 106 sichtbar, in welcher der abgeflachte Endbereich der Abtriebsachse 30 eingeführt werden kann. Die Achsaufnahme 106 ist mit zwei in den Darstellungen nicht sichtbaren Aufnahmeabflachungen ausgestattet, die entsprechend den Abflachungen 84 des Abtriebsachse 30 ausgebildet sind, und durch deren Zusammenwirken die Übertragung eines Drehmoments von der Abtriebsachse 30 auf die Aufsteckbürste 14 gewährleistet.

In dieser Figur ist ebenfalls erkennbar, dass der Öffnung 104 endbereichsseitig eine zylinderförmige Halteausnehmung 107 vorgeordnet ist. Die Halteausnehmung 107 dient dazu, dass die Aufsteckbürste 14 zur Aufbewahrung in einer Basisstation auf einen entsprechenden Halter gesteckt werden kann. Die Halteausnehmung 107 nimmt einen wesentlichen Teil des Halsquerschnitts ein und hat eine längsseitige Tiefe von weniger als 10 mm, vorzugsweise von weniger als 5 mm. Die Achsaufnahme 106 und die Halteausnehmung 107 sind vorzugsweise koaxial zueinander angeordnet. Die Halteausnehmung 107 kann noch eine zweite Funktion abdecken: durch eine entsprechende Ausgestaltung kann eine schwenkbare Aufsteckbürste 14 geformt werden, welche auch auf den in Fig. 3 und Fig. 4 dargestellten Grundkörper 10 aufsteckbar ist. Eine die Halteausnehmung 107 umgebende äussere Hülle der Aufsteckbürste 14 umgibt in diesem Fall schürzenartig den Anschlussstutzen 32. Grundkörper 10, welche sowohl mit Aufsteckbürsten 14 für oszillierende und als auch für eine schwenkende Bewegungen benutzt werden können, sind vorzugsweise nur mit einem Getriebe 48 für die Bereitstellung der Schwenkbewegung ausgestattet. Eine zusätzlich überlagerte translatorische Bewegungskomponente erscheint hier weniger sinnvoll.

Am Aufsteckbürstengrundkörper 102 sind zudem sowohl am kopfseitigen Endbereich wie auch im halsseitigen Abschnitt Abstützstümpfe 108 aus Hartmaterial ausgeformt. Diese Abstützstümpfe 108 dienen verschiedenen Funktionen: der Abstützung in einem Spritzgusswerkzeug in einem nachfolgenden Spritzgussverfahrensschritt zum Anspritzen eines weichelastischen Materials, der Abstützung des Aufsteckbürstengrundkörpers 102 beim Beschriften und stellen gegebenenfalls mit ihrer an der Oberfläche der Aufsteckbürste 14 sichtbaren Oberfläche geeignete Bereiche dar, auf denen Beschriftungen beispielsweise mittels Heissprägen, Inkjet- oder Tamponbeschriftungsverfahren aufgebracht werden können.

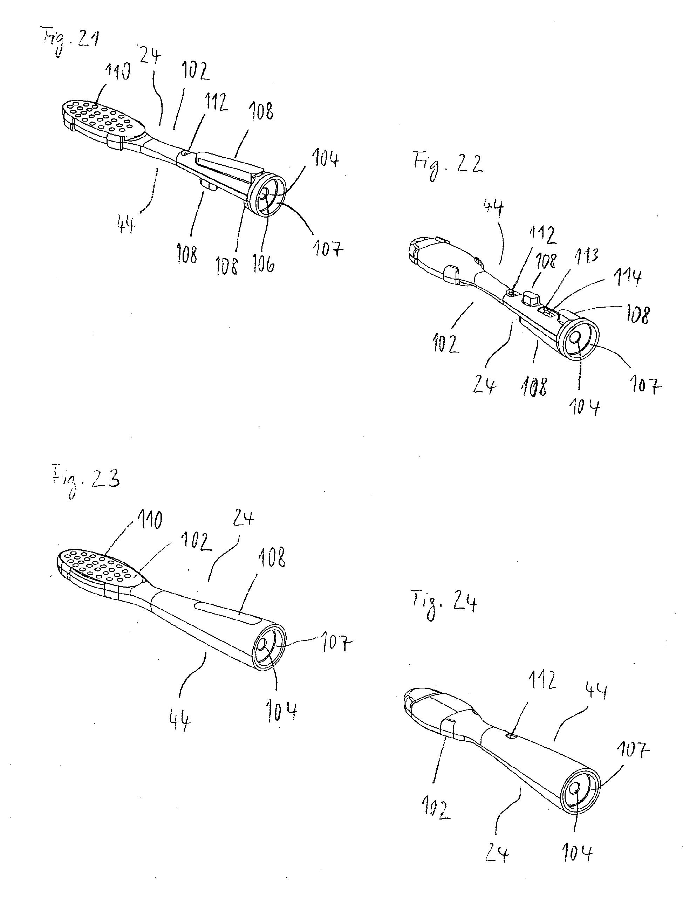

Der Aufsteckbürstengrundkörper 102 ist kopfseitig bereits mit Borstenaufnahmelöchern 110 ausgestattet. Darüber hinaus befinden sich sowohl auf der in Fig. 21 gezeigten Oberseite wie auch der in Fig. 22 gezeigten Unterseite 44 je ein Entlüftungsloch 112. Das auf der Oberseite 24 und achsaufnahmeseitig an der Unterseite 44 ausgebildete Entlüftungsloch 112 dient beim Spritzgussverfahren der Abstützung eines Kerns zur Ausformung der Achsaufnahme 106. Das oberseitige Entlüftungsloch 112 im Aufsteckbürstengrundkörper 102 wird im anschliessenden Spritzgussverfahrensschritt von weichelastischem Material überdeckt. Das verbleibende unterseitige Entlüftungsloch 112 wird nicht mit weichelastischem Material überdeckt und dient dem Entweichen von Luft beim Einführen der Abtriebsachse 30 sowie dem Durchspülen der Achsaufnahme 106 mit Flüssigkeit zu Reinigungszwecken.

In Fig. 22 ist im halsseitigen Endbereich des Aufsteckbürstengrundkörpers 102, zwischen den beiden unterseitigen Abstützstümpfen 108, eine im Wesentlichen U-förmige Ausnehmung 113 sichtbar. Die U-förmige Ausnehmung 113 umgibt ein zungenartiges Federelement 114 mit darauf angeformten Schnapp-Nocken, der mit einer Kerbe 88 auf der Abtriebsachse 30 zusammenwirkt, um die Aufsteckbürste 14 am Grundkörper 10 der Elektrozahnbürste 12 zu halten.

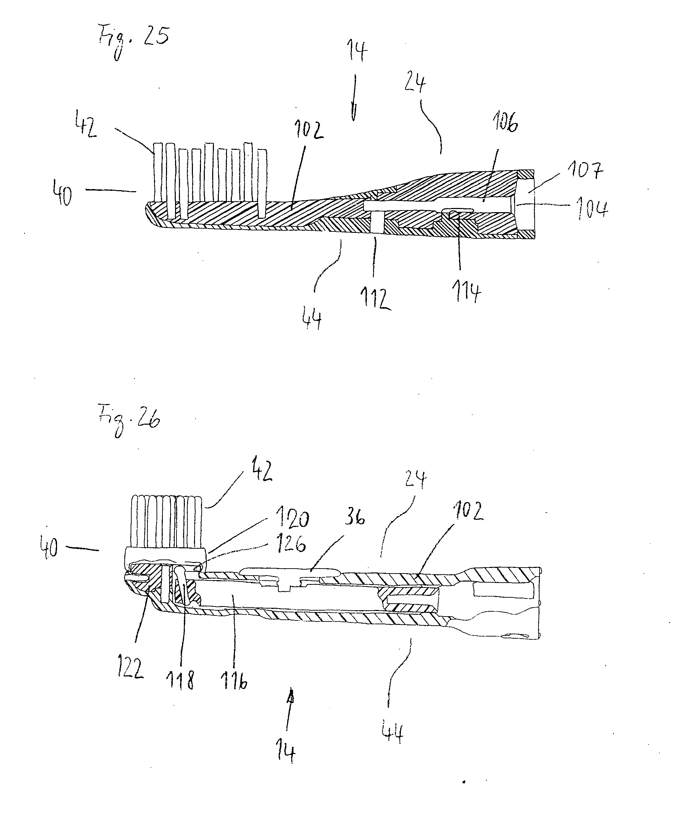

In den Figuren 23 und 24 ist die Oberseite 24 bzw. die Unterseite 44 des in Fig. 21 bzw. Fig. 22 gezeigten Aufsteckbürstengrundkörpers 102 nach dem Überspritzen mit einem weichelastischen Material gezeigt. Der mit weichelastischen Material umspritzte Aufsteckbürstengrundkörper 102 wird anschliessend im Kopfbereich beispielsweise mittels eines klassischen Beborstungsverfahrens mit Borsten 42 ausgestattet. Die Aufsteckbürste 14 ist vorzugsweise aus mehreren Kunststoffmaterialien hergestellt. Vorzugsweise wird dabei je ein Hart- und ein Weichmaterial eingesetzt. Die verschiedenen Kunststoffe haften aneinander. Bei einer kombinierten Verwendung von Hart- und Weichmaterialien in der Aufsteckbürste 14 kann eine gewisse Flexibilität der Aufsteckbürste 14 erreicht werden. Über eine Kombination von verschiedenen Schichtdicken und Formen lässt sich die Flexibilität gut einstellen. Des weiteren kann mit dem Weichmaterial auf der äusseren Oberfläche der Aufsteckbürste 14 eine Struktur geformt werden, welche ein Abziehen der Aufsteckbürste 14 vom Grundkörper 10 unterstützt, in dem sie eine rückhaltende Struktur für die Finger der menschlichen Hand bietet.

Um den Kopf 38 während des Beborstens zu Stützen sind auf der Unterseite 44 des Bürstenkopfs 38 Abstützflächen angebracht, welche den Bürstenkopf 38 während dem Beborsten fixieren und stützen.

Die fertig gestellte Aufsteckbürste 14 ist in einer Schnittdarstellung in Fig. 25 gezeigt. In dieser Schnittdarstellung ist das für die Herstellung des Aufsteckbürstengrundkörpers 102 verwendete Hartmaterial mit einer anderen Schraffur dargestellt als das in einem zweiten Verfahrensschritt aufgespritzte weichelastische Material. Besonders deutlich ist in dieser Darstellung auch die Achsaufnahme 106 sowie das nicht überdeckte Entlüftungsloch 112 sichtbar.

Ebenso ist in Fig. 25 das Federelement 114 deutlich erkennbar, welches auf der Aufsteckbürste 14 einseitig ausgeformt ist und es der Aufsteckbürste 14 deshalb ermöglicht, in zwei verschiedenen Orientierungen um seine Längsachse auf den Grundkörper 10 aufgesteckt zu werden. Das Federelement 114 ist teilweise von weichelastischem Material umgeben. Durch eine Variation der Dicke des Hartmaterials des Federelements 114, der Ausdehnung des Schnapp-Nockens sowie einer Variation der Dicke des umgebenden weichelastischen Materials kann ein Abzugsgewicht zum Abziehen der Aufsteckbürste 14 von der Abtriebsachse 30 präzise eingestellt werden. Das Abzugsgewicht beträgt zwischen 3 kg und 5 kg, vorzugsweise zwischen 3,5 kg und 4,5 kg. Das Federelement 114 muss bereits im ersten Spritzgussverfahrensschritt, bei der Entnahme des Kerns, welcher zur Formung der Achsaufnahme 106 dient, aufgrund seiner federelastischen Eigenschaften federnd weichen. Dieselbe Ausführung des Federelements 114 kann auch in einer oszillierenden Bürste, wie in Fig. 26 dargestellt, angewendet werden.

Auf der Unterseite 44 kann die in Fig. 25 gezeigte Aufsteckbürste am Kopf 38 zusätzlich mit einer nicht gezeigten gummielastischen Reinigungsstruktur in Form eines Zungenreinigers ausgestattet sein. Dazu werden vorzugsweise aus dem weichelastischen Material Schaberkanten ausgebildet, die bei einer Bewegung Plaque und Verunreinigungen von der Zunge entfernen können. Gleichartiges weichelastisches Material kann dazu benutzt werden, um im Borstenfeld weichelastische Massageelemente, vorzugsweise gummielastische Reinigungslamellen bzw. Reinigungsstrukturen zu formen.

Fig. 26 ist eine Schnittdarstellung der bereits in Fig. 4 gezeigten Ausführungsform einer Aufsteckbürste 14. Diese Ausführungsform der Aufsteckbürste 14 ermöglicht eine reversierend rotierende bzw. reversierend oszillierende Bewegung des Reinigungselements 40. In dieser Darstellung ist insbesondere die auf die Abtriebsachse 30 aufsteckbare Aufsteckachse 116 mit dem Auslenkelement 118 gut erkennbar. Ebenso ist das Stellelement 36, dessen Stellung die relative Positionierung der Aufsteckachse 116 innerhalb des Halses 34 bestimmt und infolgedessen den Schwenkwinkelbereich des Reinigungselements 40 bestimmt, erkennbar. Das Reinigungselement 40 weist in dieser Ausführungsform einen scheibenförmigen Borstenträger 120 auf und ist bei der Herstellung in einem konventionellen Beborstungsverfahren mittels Metallanker, einem AFT (Anker Free Tufting) - oder einem IMT (In Mold Tufting) - Verfahren mit Borsten 42 ausgestattet worden.

Der Borstenträger 120 ist auf einer Drehscheibe 122 befestigt, die über eine zentrisch in der Drehscheibe 122 befestigte Drehscheibenachse 124 schwenkbar am Aufsteckbürstengrundkörper 102 gelagert ist. Die Drehscheibenachse 124 erstreckt sich im Wesentlichen rechtwinklig zur Längsausdehnung der Aufsteckachse 116 bzw. der Abtriebsachse 30. Die Drehscheibe 122 weist einen Schlitz 126 auf, in welche das Auslenkelement 118 eingreift. Durch die Veränderung der Lage der Aufsteckachse 116 innerhalb des Halses 34, die wie bereits erwähnt über das Stellelement 36 erfolgen kann, wird die radiale Eingriffsposition des Auslenkelements in der Drehscheibe 122 beeinflusst, so dass zwischen einem grösseren und kleineren Schwenkwinkel der Drehscheibe 122 und damit des Reinigungselements 40 gewählt werden kann. Der Schwenkwinkel beträgt dabei weniger als 35°, vorzugsweise weniger als 30°. Weitere Informationen zum internen Aufbau dieser Ausführungsform einer Aufsteckbürste 14 können beispielsweise der CH 688537 entnommen werden.

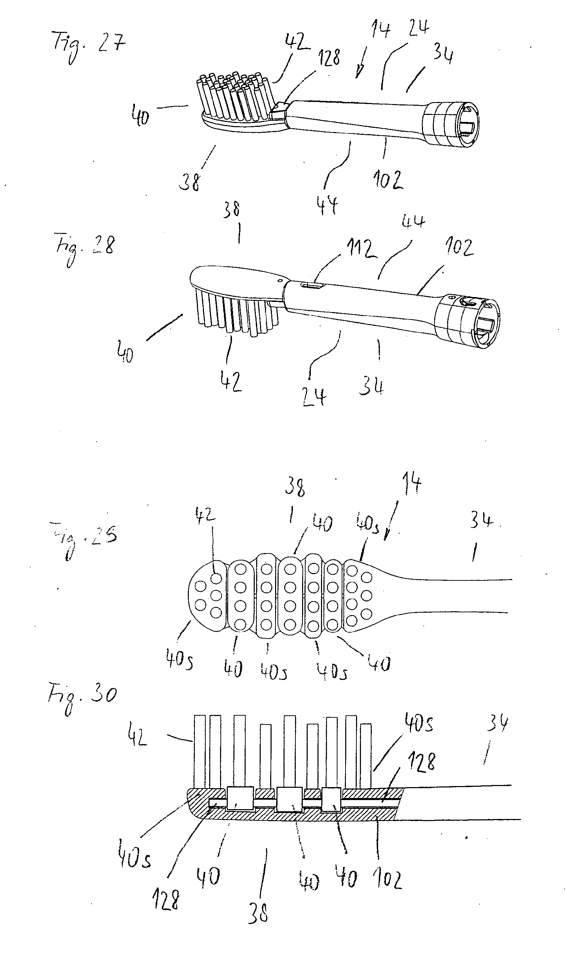

Eine weitere Ausführungsform einer Aufsteckbürste 14 mit einem schwenkbaren Reinigungselement 40 ist in Fig. 27 und 28 dargestellt. Im Gegensatz zu der in Fig. 2 und Fig. 21 bis 25 gezeigten Ausführungsform, bei welcher die gesamte Aufsteckbürste 14 zusammen mit dem Reinigungselement 40 verschwenkt wird, ist ähnlich zu der in Fig. 26 gezeigten Ausführungsform der Aufstückbürstengrundkörper 102 fest bezüglich des Grundkörpers 10 aufgesteckt und nicht verschwenkbar. Das Reinigungselement 40 ist mit einer Achsverlängerung 128 fest verbunden. Die Achsverlängerung 128 wiederum ist schwenkbar im Aufsteckbürstengrundkörper 102 gelagert. Beim Aufstecken dieser Aufsteckbürste 14 auf den Grundkörper 10 wird, ähnlich wie im Fall der Aufsteckachse 116 (siehe Fig. 26) die Achsverlängerung 128 mit der Abtriebsachse 30 verbunden. Aufgrund von Abflachungen 84, die mit entsprechenden Aufnahmeseiten der Achsverlängerung 128 zusammenwirken, wird ein Drehmoment von der Abtriebsachse 30 auf die Achsverlängerung 128 übertragen. Von aussen gesehen bewegt sich nur das bewegbare Reinigungselement 40. Das Reinigungselement 40 kann in einer alternativen Variante auch winklig / geneigt zur Aufsteckachse 116 angeordnet sein. Damit können je nach radialem Abstand der Borsten 42 des bewegbaren Reinigungselements 40 von der Aufsteckachse 116 von den freien Enden der Borsten 42 unterschiedlich lange Wegstrecken überstrichen werden.

In Fig. 29 und 30 ist eine Weiterentwicklung der in Fig. 27 und 28 gezeigten Ausführungsform einer Aufsteckbürste 14 dargestellt. In diesem Fall sind entlang der Längsausdehnung der Aufsteckbürste 14 alternierend stationäre Reinigungselemente 40s und schwenkend bewegbare Reinigungselemente 40 angeordnet. Die bewegbaren Reinigungselemente 40 sind, wie in Fig. 30 sichtbar, drehfest mit der Achsverlängerung 128 verbunden. Bei auf den Grundkörper 10 aufgesteckter Aufsteckbürste 14 und aktiviertem Betriebszustand der Elektrozahnbürste 12 schwenken die bewegbaren Reinigungselemente 40 relativ gegenüber den stationären Reinigungselementen 40s aus, so dass die jeweils an ihnen befestigten Borsten 42 ebenfalls relative Schwenkbewegungen zueinander ausführen. Auf diese Weise wird ein besonders bevorzugter Reinigungseffekt erzielt. Zu beachten ist, dass wenn die Aufsteckachse 116 bzw. die Achsverlängerung 128 unterhalb des Borstenfeldes durchgeführt werden muss, der Kopf 38 stark verdickt ausgebildet werden muss, um dennoch die geforderte Stabilität zu erreichen.

Eine weitere Ausführungsform einer Aufsteckbürste 14 ist in den Figuren 31 und 32 dargestellt. Auch bei dieser Ausführungsform kann ein schwenkbares Reinigungselement 40, welches endbereichsseitig an der Aufsteckbürste 14 angeordnet ist, gegen ein halsseitig positioniertes stationäres Reinigungselement 40s verschwenkt werden. Das schwenkend bewegbare Reinigungselement 40 ist wiederum drehfest mit der Achsverlängerung 128 verbunden und wird im aktiven Betriebszustand der Elektrozahnbürste 12 aufgrund einer mechanischen Kopplung mit der Abtriebsachse 30 gegenüber dem Hals 34 und dem stationären Reinigungselement 40s ausgelenkt. Zudem ist diese Ausführungsform einer Aufsteckbürste 14 auch für einen Einsatz bei einer kombinierten Bewegung mit einer reversierend schwenkenden und einer reversierend translatorischen Bewegungskomponente geeignet. Die reversierend translatorische Bewegungskomponente bewirkt in diesem Fall eine Hin- und Her-Bewegung des schwenkend bewegbaren Reinigungselementes 40 entlang der Längsausdehnung der Abtriebsachse 30. Zu diesem Zweck weist das Getriebe 48 beispielsweise die in Fig. 12 bis Fig. 15 und in Fig. 20 gezeigten Nockenverlängerung 94 auf.

Die in den Figuren 27 bis 32 dargestellten Ausführungsformen der Aufsteckbürste 14 sind jeweils so ausgestaltet, dass der Hals 34 aufsteckbar bzw. lösbar fest mit dem Anschlussstutzen 32 verbunden ist und sich demnach nicht mit den bewegbaren Reinigungselementen 40 bewegt. Vorzugsweise werden die Zonen an denen die Aufsteckachse 116 aus dem Aufsteckbürstengrundkörper 102 hervortritt mindestens teilweise mit weichelastischem Material umgeben. Dies dient wiederum als Einklemmschutz und / oder zur Abdichtung und Lagerung.

Alternativ zu der in Fig. 31 und Fig. 32 gezeigten Anordnung der Reinigungselemente 40, 40s ist es natürlich auch möglich, stationäre Reinigungselemente 40s im freien Endbereich der Aufsteckbürste 14 anzuordnen und das bewegbare Reinigungselement 40 halsseitig zu positionieren. Darüber hinaus ist es auch denkbar, mittels zwei parallel zueinander verlaufenden Achsverlängerungen 128 zwei schwenkend bewegbare Reinigungselemente 40 mit unterschiedlichen maximalen Auslenkungswinkel oder ein schwenkend bewegbares Reinigungselement 40 mit zwei unterschiedlichen maximalen Auslenkungswinkeln bereitzustellen. Auf diese Weise kann wenigstens ein schwenkend bewegbares Reinigungselement 40 aufgrund eines grösseren maximalen Auslenkungswinkels eine grössere Reinigungsleistung erzielen.

Allgemein gilt für alle beschriebenen Ausführungsformen der Aufsteckbürste 14, dass sie eine Länge von 55 mm bis 85 mm, vorzugsweise von 65 mm bis 75 mm, gemessen von ihrem freien Ende bis zum aufsteckseitigen Ende der Aufsteckbürste 14. Das bei der fertiggestellten Aufsteckbürste 14 geöffnete Entlüftungsloch 112 befindet sich in Längsrichtung in einem Abstand von 25 mm bis 35 mm, vorzugsweise von 28 mm bis 32 mm vom aufsteckseitigen Ende der Aufsteckbürste 14 entfernt. Der Schnapp-Nocken des Federelements 114 bei der in Fig. 21 bis Fig. 25 gezeigten Ausführungsform befindet sich in Längsrichtung zwischen 12 mm bis 20 mm, vorzugsweise 15 mm bis 17 mm vom aufsteckseitigen Ende der Aufsteckbürste 14 entfernt.

Als Hartmaterial für die oben beschriebenen Komponenten werden beispielsweise Polypropylen (PP), Polyester (PET), Polycyclohexandimethanoltherephtalat (PCT/PCT-A (säuremodifiziert) / PCT-G (glykolmodifiziert)) Polyethylen (PE), Polysterol (PS), Styrolacrylnitril (SAN), Polymethylmethacrylat (PMMA), Acrylbutadienstyrol (ABS), Polyoxymethylen (POM) oder Polyamid (PA) verwendet. Vorzugsweise wird Polypropylen (PP) mit einem Elastizitätsmodul von 1000 N/m² bis 2400 N/m², vorzugsweise von 1300 N/m² bis 1800 N/m², eingesetzt.

Als weichelastisches Material wird beispielsweise low density Polyethylen (PE-LD), high density Polyethylen (PE-HD), Polyethylen (PE), Polyvinylchlorid (PVC), gummielastischer Werkstoff, wie Polyurethan (PUR) oder ein thermoplastisches Elastomer (TPE), vorzugsweise ein thermoplastisches Elastomer (TPE) eingesetzt. Ebenfalls möglich ist der Einsatz von Polyolefin-basiertem Elastomer. Die Shore A Härte des verwendeten weichelastischen Materials liegt vorzugsweise unter 90.

Bei der Verwendung von weichelastischem Material am Grundkörper 10, beispielsweise für die Haftelemente 28, oder bei der Ausbildung von Dämpfungselementen, insbesondere an der Aufsteckbürste 14 beträgt die Dicke von Schichten aus weichelastischem Material mehr als 0,2 mm, vorzugsweise mehr als 0,5 mm. Weichelastisches Material mit einer Shore A Härte unter 50, vorzugsweise unter 35, wird sowohl am Grundkörper 10, wie auch an der Aufsteckbürste 14, zur Dämpfung von Vibrationen, Schwingungen und Lärmemissionen, die im aktiven Betriebszustand auftreten, eingesetzt. Diese Materialeigenschaften bieten einen guten Kompromiss um die Funktionen, welche mit dem weichelastischen Material erfüllt werden sollen, auf optimale Weise zu gewährleisten. Gegebenenfalls können auch im Aufstellabschnitt 18 oder oberhalb von Beschriftungsfeldern dünne Schichten aus weichelastischem Material angeformt sein.

Darüber hinaus wird weichelastisches Material auch zur Ausbildung für am Kopf 38 bzw. am Reinigungselement 40 angeordnete Reinigungselemente, wie einen bereits erwähnten Zungenreiniger oder weichelastische Reinigungslamellen, eingesetzt. Die weichelastischen Reinigungslamellen können dabei aussen die Bosten 42 umstehend oder innerhalb von Borstenfeldern angeordnet sein. Die Borsten 42 selbst sind vorzugsweise aus Polyamid oder Polyester mit einem Durchmesser von 0,1 bis 0,2 mm, vorzugsweise von 0,125 mm bis 0,175 mm, gefertigt. Sie sind in Borstenbündeln angeordnet. Der verhältnismässig klein geformte Kopf 38 weist 20 bis 30, vorzugsweise von 22 bis 28 Bündel von Borsten 42 auf. Verschiedene Formen von Borstenanordnungen sind in den folgenden Fig. 33 bis 41 gezeigt.

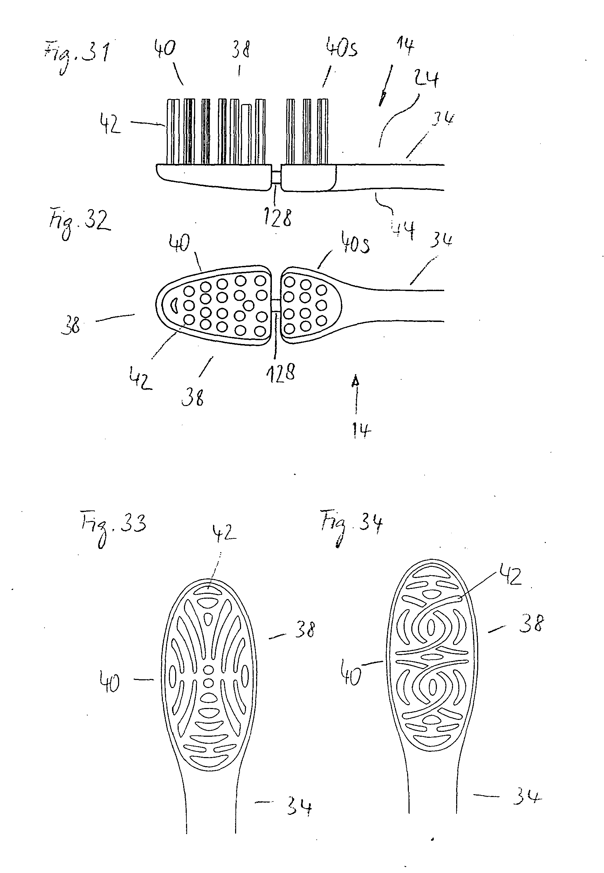

Die in den Fig. 33 und 34 gezeigten Ausführungsformen von an Köpfen 38 angeordneten Reinigungselementen 40 sind insbesondere für Elektrozahnbürsten 12 geeignet, die eine reversierend schwenkende oder reversierend translatorische Bewegung der Reinigungselemente 40 im aktiven Betriebszustand erzeugen. Bei beiden gezeigten Ausführungsformen sind Borsten 42 zu Borstenbündeln oberhalb von länglich abgerundeten, sichel-, C- bzw. Halbmond-förmigen oder ovalen Grundflächen kombiniert. Durch eine Ausrichtung der länglich angeordneten Borstenbündel mit ihrer Längsachse wenigstens nahezu parallel zur Schwenkachse der Reinigungselemente 40 wird ein wischartiger Effekt erreicht. Insbesondere bei der Ausführungsform in Fig. 34 sind zudem Borstenbündel mit ihrer Längsachse auch rechtwinklig zur Längsachse des Halses 34 angeordnet, um einen derartigen Wischeffekt auch bei einer reversierend translatorischen Hin- und Her-Bewegung des Kopfes 38 zu erreichen. Die in Fig. 34 gezeigte Ausführungsform eines bewegbaren Reinigungselementes 40 eignet sich daher insbesondere auch für eine kombinierte Bewegung des Reinigungselements 40 mit einer reversierend schwenkenden und einer reversierend translatorischen Bewegungskomponente. Die gezeigten Ausführungsformen von Reinigungselementen 40 können auch bei manuellen Zahnbürsten eingesetzt werden.

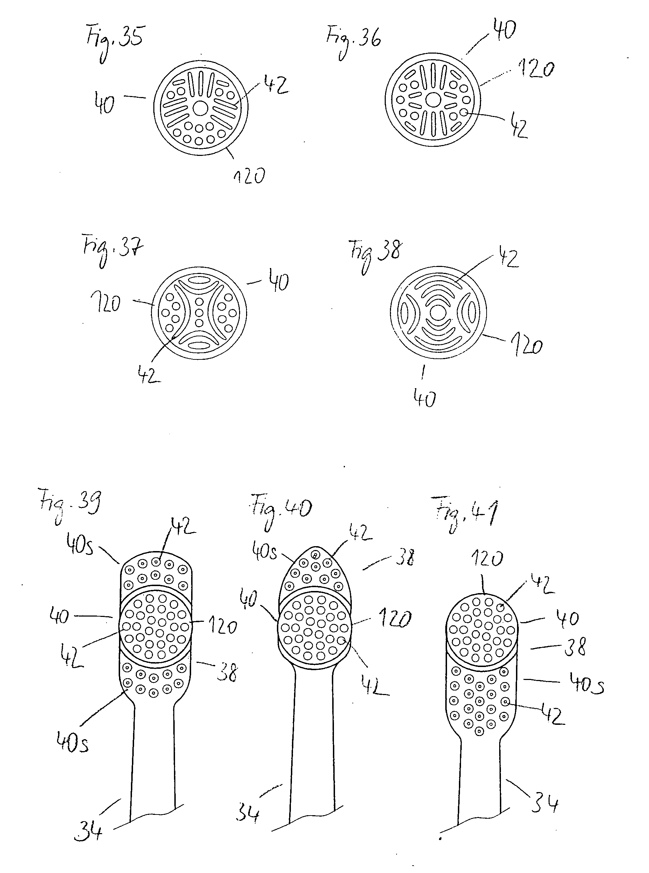

Die in den Fig. 35 bis 38 gezeigten bewegbaren Reinigungselemente 40 sind oberhalb eines im Wesentlichen kreisförmigen oder in Längsrichtung leicht elliptisch geformten Borstenträgers 120 angeordnet und insbesondere für den Einsatz bei reversierend oszillierenden Bewegungsformen vorgesehen. Neben kreisförmigen Borstenbündeln sind auch diese Reinigungselemente 40 mit Borsten 42 oberhalb von im Wesentlichen länglichen Grundflächen (siehe Fig. 35, Fig. 36) oder auch sichelförmigen Grundflächen (siehe Fig. 37 und Fig. 38) angeordnet. Auch in diesem Fall sind die Längsachsen der länglichen Grundflächen der Borstenbündel bevorzugterweise wenigstens nahezu rechtwinklig zur Schwenkachse, um welche das Reinigungselement 40 reversierend oszilliert, angeordnet.

In den Fig. 39 bis 41 sind Ausführungsformen von Reinigungselementen 40 gezeigt, bei denen jeweils stationäre Reinigungselemente 40s mit schwenkend bewegbaren Reinigungselementen 40 kombiniert sind. So ist beispielsweise in Fig. 39 ein zentral angeordnetes schwenkend bewegbares Reinigungselement 40 auf einem kreisförmigen Borstenträger 120 sowohl am freien Endbereich als auch halsseitig des Kopfes 38 mit stationären Reinigungselementen 40s umstanden. Bei der in Fig. 40 gezeigten Ausführungsform ist das reversierend oszillierbare Reinigungselement 40 von einem stationären Reinigungselement 40s, welches am freien Endbereich des Kopfes 38 angeordnet ist und eine abgerundetdreiecksförmige Grundfläche aufweist, benachbart. In Fig. 41 ist lediglich halsseitig vom schwenkend bewegbaren Reinigungselement 40 ein stationäres Reinigungselement 40s angeordnet.

Die Beborstung der gezeigten Ausführungsformen von Reinigungselementen 40 kann auf verschiedene Art und Weise erfolgen, beispielsweise mittels konventionellen Ankerplättchen oder wie bereits erwähnt mittels IMT- oder AFT-Verfahren. Insbesondere bei den beiden letztgenannten Verfahren ist es möglich, Borstenbündel mit sichelförmigen, C-förmigen, S-förmigen, 8-förmigen, n-eckförmigen, kreisförmigen, ovalen usw. Grundflächen, die symmetrisch oder auch asymmetrisch ausgeformt sind, herzustellen. Diese Borstenbündel mit vergleichsweise grossen Ausdehnungen der Grundflächen in verschiedene Richtungen kombinieren die wischartigen Effekte für verschiedene Bewegungsrichtungen der Reinigungselemente 40. Die beiden Beborstungsverfahren ermöglichen zudem eine höhere Gestaltungsfreiheit in Bezug auf das Aussehen des Borstenfeldes.

Neben sich im Wesentlichen rechtwinklig vom Borstenträger 120 erhebenden Borsten 42 bzw. Bündeln von Borsten 42 ist es auch möglich, X-förmig angeordnete Borsten 42 an einem Reinigungselement 40, 40s auszubilden. Die X-förmig ausgerichteten Borsten 42 stehen dann unter einem Winkel von 3° bis 20°, vorzugsweise 8° bis 14° zueinander. Zudem ist es möglich, insbesondere an den äusseren Rändern der Reinigungselemente 40, 40s Borsten 42 bzw. Borstenbündel mit längeren und/oder zugespitzten Borsten 42 anzuordnen. Diese dienen dann insbesondere einer verbesserten Reinigung der Interdentalräume zwischen den Zähnen. Darüber hinaus ist es auch möglich, die Reinigungselemente 40 mit Borsten 42 auf im Wesentlichen runden oder leicht ovalen Grundflächen zu Borstenbündeln zusammenzufassen, welche dann insbesondere der Reinigung eines Zahnfleischsaumes dienen. Insgesamt können auf den Borstenträgern 120 zylindrische, wie auch einseitig- oder zweiseitig-zugespitzte Borsten 42 verwendet werden, jeweils artenrein oder kombiniert oder auch in Kombination mit zusätzlichen Massage- und Reinigungslamellen bzw. Reinigungsstrukturen aus Weichmaterial. Die Anwendung zugespitzter Borsten 42 auf Elektrozahnbürsten ist bereits in der WO 2004/093718 detailliert beschrieben. Die beschriebenen Köpfe bzw. Reinigungselemente können direkt mit der erfindungsgemässen Elektrozahnbürste 12 kombiniert werden.

Die beschriebenen Aufsteckbürsen 14 sind vorzugsweise auswechselbar gestaltet. Es ist aber auch möglich eine Elektrozahnbürste 12 mit dem erfindungsgemässe Getriebe 48 und der Aufsteckbürste 14 so zu gestalten, dass diese Elemente einstückig ausgebildet sind und die Aufsteckbürste 14 nicht auswechselbar ist. Dies ist vor allem bei günstigen Batteriegeräten der Fall.

Der Vollständigkeit halber sei auch erwähnt, dass die beispielhaft gezeigten Reinigungselemente 40, 40s auch durch andere Reinigungs- oder Wirkelemente ausgetauscht werden können. In der Mundhygiene sind dies beispielsweise generell Interdentalaufsätze, wie Spiralbürsten, Zahnstocher etc., Polierelemente, weichelastische Elemente (z.B. Proficups) oder Zungenreinigeraufsätze. Das erfindungsgemäße Getriebe 48 kann selbstverständlich auch in anderen Gebieten der Körperpflege (Gesichtsmassage, Nagelpflege, Kopfmassage, Nass- und Trockenrasur etc.) mit entsprechend ausgestalteten Wirkaufsätzen eingesetzt werden.

## Patentansprüche

1. Getriebe für eine Elektrozahnbürste (12) zur Übertragung und Umformung einer in einer Drehrichtung orientierten Drehbewegung, die von einem Elektromotor (58) an einer Antriebsachse (60) bereitgestellt ist, in eine Bewegung einer Abtriebsachse (30) zum Antrieb eines bewegbaren Reinigungselementes (40) der Elektrozahnbürste (12), **dadurch gekennzeichnet, dass** das Getriebe (48) mehrstufig mit mindestens einer antriebsseitigen ersten Getriebestufe und mindestens einer abtriebsseitigen zweiten Getriebestufe ausgestattet ist und wenigstens eine Untersetzung (76) und wenigstens eine Übersetzung (92, 100) aufweist.

2. Getriebe nach Anspruch 1, **dadurch gekennzeichnet, dass** die Abtriebsachse (30) im aktiven Betriebszustand der Elektrozahnbürste (12) mindestens eine reversierende Bewegung ausführt.

3. Getriebe nach Anspruch 1 oder 2, **dadurch gekennzeichnet, dass** die Übersetzung (92, 100) die abtriebsseitige zweite Getriebestufe bildet und als eine zahnradfreie Getriebestufe, vorzugsweise als ein Kurvengetriebe, ausgelegt ist.

4. Getriebe nach einem der Ansprüche 1 bis 3, **dadurch gekennzeichnet, dass** die Untersetzung (76) die antriebsseitige erste Getriebestufe bildet und zwei ineinander eingreifende Zahnräder, vorzugsweise ein stirnverzahntes Antriebszahnrad (68) und ein abtreibendes seitenverzahntes Kronenrad (70), aufweist.

5. Getriebe nach Anspruch 4, **dadurch gekennzeichnet, dass** die Übersetzung (92) einen Nocken (72), der auf einem der Zahnräder, gegebenenfalls dem Kronenrad (70) der Untersetzung (76) angeordnet ist, und einen vorzugsweise klammerartigen Abnehmer (74) mit wenigstens einer Abtastkante (82) aufweist, wobei die Abtastkante (82) eine Kurvenwand (80) auf dem Nocken (72) abgreift und mit einer die Bewegung zum bewegbaren Reinigungselement (40) leitenden Abtriebsachse (30) wirkverbunden ist.

6. Getriebe nach Anspruch 5, **dadurch gekennzeichnet, dass** der Nocken (72) einen Querschnitt in Form eines verrundeten, vorzugsweise regelmässigen n-Ecks aufweist, wobei n eine ungerade positive Zahl ist, das n-Eck einen Umkreis besitzt und alle Ecken und Seiten verrundet gestaltet sind.

7. Getriebe nach Anspruch 5 oder 6, **dadurch gekennzeichnet, dass** die Kurvenwand (80) des Nockens (72) derart ausgeformt ist, dass jede von der Kurvenwand zweiseitig begrenzte, in einer Querschnittsebene des Nockens (72) durch den Mittelpunkt seiner Querschnittsform verlaufende Querschnittslänge wenigstens nahezu gleich lang ist.

8. Getriebe nach einem der Ansprüche 5 bis 7, **dadurch gekennzeichnet, dass** der Nocken (72) konzentrisch bezüglich des Kronenrades (70) angeordnet ist.

9. Getriebe nach Anspruch 5 oder 7, **dadurch gekennzeichnet, dass** der Nocken (72) exzentrisch auf dem Kronenrad (70) angeordnet ist.

10. Getriebe nach einem der Ansprüche 5 bis 9, **dadurch gekennzeichnet, dass** auf dem Nocken (72) gegenüberliegend einem der Zahnräder, gegebenenfalls dem Kronenrad (70), eine Nockenverlängerung (94) angeordnet ist, welche von einer Abtastwand (98) des Abnehmers abgegriffen wird, so dass vorzugsweise eine weitere Übersetzung (100) ausgebildet ist, wobei vorzugsweise die an einem Innengestell (46) angeordnete Zahnradachse bzw. Kronenradachse (78) durch die Nockenverlängerung (94) hindurch verläuft.

11. Getriebe nach Anspruch 7, **dadurch gekennzeichnet, dass** die Nockenverlängerung (94) einen Querschnitt in Form eines verrundeten, vorzugsweise regelmässigen n-Ecks aufweist, wobei n eine ungerade positive Zahl ist und das n-Eck einen Umkreis besitzt.

12. Getriebe nach Anspruch 10 oder 11, **dadurch gekennzeichnet, dass** die Nockenverlängerung (94) derart ausgeformt ist, dass jede von ihrer Wand zweiseitig begrenzte, in einer Querschnittsebene der Nockenverlängerung (94) durch den Mittelpunkt ihrer Querschnittsform verlaufende Querschnittslänge wenigstens nahezu gleich lang ist.

13. Getriebe nach einem der Ansprüche 10 bis 12, **dadurch gekennzeichnet, dass** die Nockenverlängerung (94) konzentrisch bezüglich der Zahnradachse bzw. Kronenradachse (78) angeordnet ist.

14. Getriebe nach einem der Ansprüche 10 bis 12, **dadurch gekennzeichnet, dass** die Nockenverlängerung (94) exzentrisch bezüglich der Zahnradachse bzw. Kronenradachse (78) angeordnet ist.

15. Getriebe nach Anspruch 14, **dadurch gekennzeichnet, dass** die Nockenverlängerung (94) einen ovalen Querschnitt aufweist.

16. Elektrozahnbürste mit einem Grundkörper (10), der einen Griff (16) ausformt und einen Elektromotor (58) sowie ein Getriebe (48) nach einem der Ansprüche 1 bis 15 aufnimmt, einem an den Grundkörper (10) anschliessenden Hals (34) und einem am Hals (43), gegenüberliegend dem Griff (16) angeordneten Kopf (38), der mit einem bewegbaren Reinigungselement (40) bestückt ist, wobei die Antriebsachse (60) des Elektromotors (58) im angespiesenen Zustand bei unbelastetem Betrieb der Elektrozahnbürste (12) mit einer Drehzahl zwischen 2000 U/min und 12000 U/min, vorzugsweise zwischen 3000 U/min und 8000 U/min rotiert.

17. Elektrozahnbürste nach Anspruch 16, **dadurch gekennzeichnet, dass** das bewegbare Reinigungselement (40) eine Schwenkbewegung mit einer Frequenz zwischen 3000 U/min und 15000 U/min, vorzugsweise zwischen 10000 U/min und 12000 U/min ausführt.

18. Elektrozahnbürste nach Anspruch 17, **dadurch gekennzeichnet, dass** das bewegbare Reinigungselement (40) bei der Schwenkbewegung insgesamt um 1° bis 20°, vorzugsweise um 3° bis 15°, besonders bevorzugt um etwa 10° ausgelenkt wird.

19. Elektrozahnbürste nach Anspruch 17 oder 18, **dadurch gekennzeichnet, dass** der Schwenkbewegung des bewegbaren Reinigungselements (40) wenigstens eine weitere Schwenkbewegung überlagert ist.

20. Elektrozahnbürste nach einem der Ansprüche 17 bis 19, **dadurch gekennzeichnet, dass** das bewegbare Reinigungselement (40) am Kopf (38) einer Aufsteckbürste (14) angeordnet ist und dass die Schwenkbewegung das bewegbare Reinigungselement (40) um eine Achse, die wenigstens nahezu parallel zur Längsachse des Halses (34) verläuft, bewegt.

21. Elektrozahnbürste nach einem der Ansprüche 17 bis 19, **dadurch gekennzeichnet, dass** das bewegbare Reinigungselement (40) am Kopf (38) einer Aufsteckbürste (14) angeordnet ist und die Schwenkbewegung um eine Achse, die wenigstens nahezu rechtwinklig zur Längsachse des Halses (34) verläuft, vollzieht.

22. Elektrozahnbürste nach einem der Ansprüche 16 bis 21, **dadurch gekennzeichnet, dass** die Bewegung des bewegbaren Reinigungselements (40) eine reversierend translatorische Hin- und Her-Bewegungskomponente aufweist, deren Bewegungsrichtung sich wenigstens nahezu parallel zur Längsachse des Halses (34) erstreckt.

23. Elektrozahnbürste nach Anspruch 22, **dadurch gekennzeichnet, dass** der reversierend translatorischen Hin- und Her-Bewegungskomponente des bewegbaren Reinigungselements (40) wenigstens eine weitere reversierend translatorische Hin- und Her-Bewegungskomponente überlagert ist.

24. Elektrozahnbürste nach Anspruch 22, **dadurch gekennzeichnet, dass** die reversierend translatorische Hin- und Her-Bewegungskomponente eine Frequenz zwischen 1000 U/min und 12000 U/min, vorzugsweise zwischen 2000 U/min und 4000 U/min aufweist.

25. Elektrozahnbürste nach einem der Ansprüche 16 bis 24, **dadurch gekennzeichnet, dass** das bewegbare Reinigungselement (40) am Kopf (38) einer Aufsteckbürste (14) angeordnet ist und dass der Hals (34) der Aufsteckbürste (14) drehfest bezüglich des Grundkörpers (10) angeordnet ist.

26. Elektrozahnbürste nach einem der Ansprüche 16 bis 25, **dadurch gekennzeichnet, dass** das bewegbare Reinigungselement (40) am Kopf (38) einer Aufsteckbürste (14) angeordnet ist und dass der Hals (34) der Aufsteckbürste (14) die Bewegung zusammen mit dem bewegbaren Reinigungselement (40) vollzieht.

27. Elektrozahnbürste nach einem der Ansprüche 16 bis 26, **dadurch gekennzeichnet, dass** das bewegbare Reinigungselement (40) mit Borsten (42) bzw. Bündeln von Borsten (42) und / oder gummielastischen Reinigungslamellen bzw. Reinigungsstrukturen ausgestattet ist.

28. Elektrozahnbürste nach Anspruch 27, **dadurch gekennzeichnet, dass** auf einer Unterseite (44) des Kopfes (38) wenigstens eine der gummielastischen Reinigungsstrukturen als ein Zungenreiniger ausgeformt ist.

29. Elektrozahnbürste nach einem der Ansprüche 16 bis 27, **dadurch gekennzeichnet, dass** der Kopf (38) zusätzlich ein stationäres Reinigungselement (40s) aufweist, das fest bezüglich des Halses (34) angeordnet ist.
